(19) Europäisches Patentamt
European Patent Office
Office européen des brevets

(11) **EP 0 812 504 B1**

(12) **FASCICULE DE BREVET EUROPEEN**

(45) Date de publication et mention de la délivrance du brevet:
**27.10.1999 Bulletin 1999/43**

(21) Numéro de dépôt: **96903048.5**

(22) Date de dépôt: **05.02.1996**

(51) Int Cl.⁶: **H04M 9/08**

(86) Numéro de dépôt international:
**PCT/FR96/00185**

(87) Numéro de publication internationale:
**WO 96/27255 (06.09.1996 Gazette 1996/40)**

(54) **CORRECTION DE GAIN DE HAUT-PARLEUR POUR UN TERMINAL TELEPHONIQUE MAINS-LIBRES**

**LAUTSPRECHER-VERSTÄRKUNGSEINSTELLUNG FÜR EIN FREISPRECH-TELEKOMMUNIKATIONSENDGERÄT**

**HANDS-FREE TELEPHONE TERMINAL SPEAKER GAIN CORRECTION**

(84) Etats contractants désignés:
**AT BE CH DE DK ES GB GR IE IT LI LU MC NL PT SE**

(30) Priorité: **27.02.1995 FR 9502341**

(43) Date de publication de la demande:
**17.12.1997 Bulletin 1997/51**

(73) Titulaire: **PRESCOM**
**78180 Montigny-le-Bretonneux (FR)**

(72) Inventeurs:
• **LE DAMANY, Yves**
  **F-22300 Lannion (FR)**
• **ZURCHER, Frédéric**
  **F-22300 Lannion (FR)**
• **NIBERON, Marc**
  **F-22300 Lannion (FR)**

(74) Mandataire: **Martinet & Lapoux**
**BP 405 - Guyancourt**
**78055 St. Quentin en Yvelines Cédex (FR)**

(56) Documents cités:
EP-A- 0 515 242        EP-A- 0 614 304
WO-A-91/03116

## Description

La présente invention concerne un procédé de correction de gain de haut-parleur pour un terminal téléphonique "mains-libres" ou pour un terminal téléphonique d'audioconférence.

Un terminal ou poste téléphonique mains-libres comprend un dispositif de prise de son avec un ou plusieurs microphones, un dispositif de restitution de son avec un ou plusieurs haut-parleurs et des circuits de traitement de signaux d'émission et de réception. Ces circuits sont notamment un annuleur d'écho acoustique, un annuleur d'écho électrique, et un dispositif de variation de gain pour apporter un affaiblissement aux signaux transmis au cours d'une conversation téléphonique de sorte qu'un effet Larsen ne se produise pas. L'affaiblissement est déterminé en fonction du sens de transmission dominant et des performances des annuleurs d'écho.

Un usager commande le niveau d'écoute en modifiant un gain de haut-parleur. Plus le niveau d'écoute choisi est élevé, plus l'affaiblissement à apporter sur le sens de transmission non dominant est élevé. Cet affaiblissement est appelé gain de stabilité et prend une valeur positive inférieure à l'unité. Or une valeur d'affaiblissement trop grande, par exemple supérieure à 10 dB, amoindrit le confort d'écoute ressenti par l'usager local et par son correspondant dit usager distant. Ces derniers perçoivent des variations de niveaux des signaux de parole transmis et ont la sensation d'une communication à l'alternat. Il arrive qu'au moment de choisir le niveau d'écoute, l'usager local soit surtout sensible à l'intensité sonore de la voix de l'usager distant et qu'il choisisse un niveau d'écoute trop élevé. Il provoque alors, à son insu, une diminution de la qualité globale de l'audioconférence se traduisant surtout par une sensation d'alternat de plus en plus prononcée. Cette sensation est ressentie davantage par l'usager distant dans le cas où il utilise le combiné de son téléphone.

La présente invention vise à fournir un procédé de correction de gain de haut-parleur pour optimiser le confort d'écoute au cours d'une conversation téléphonique, non seulement pour l'usager local mais aussi pour l'usager distant.

A cette fin, un procédé de correction de gain de haut-parleur dans un terminal téléphonique mains-libres muni d'un haut-parleur en sortie d'une voie de réception, d'un microphone en entrée d'une voie d'émission, et de moyens de commande de gain pour commander des modifications du gain du haut-parleur, les voies d'émission et de réception étant desservies par une ligne téléphonique, est caractérisé en ce qu'il comprend les étapes cycliques de :

- mesurer dans la voie d'émission un signal d'émission et dans la voie de réception un signal de réception,
- déterminer un gain de compression d'émission et un gain de compression de réception respectivement pour que le produit du signal d'émission mesuré par le gain de compression d'émission soit compris entre deux seuils prédéterminés et le produit du signal de réception mesuré par le gain de compression de réception soit compris entre deux autres seuils prédéterminés,
- mesurer dans la voie d'émission un signal de sortie du microphone et dans la voie de réception un signal d'entrée du haut-parleur,
- comparer le signal de sortie de microphone mesuré et le signal d'entrée de haut-parleur mesuré pour déterminer un gain de trajet d'écho acoustique entre le haut-parleur et le microphone,
- déterminer un gain de stabilité en fonction des gain de compression d'émission, gain de compression de réception, gain de trajet d'écho acoustique et gain de haut-parleur,
- déterminer un indice de confort d'écoute en fonction du gain de stabilité et de l'indice de confort d'écoute au cycle précédent,
- comparer l'indice de confort d'écoute avec des seuils prédéterminés,
- sélectionner deux des seuils prédéterminés encadrant l'indice de confort d'écoute et définissant une plage de variation de l'indice de confort d'écoute à laquelle sont associées des paramètres de modification du gain, et
- modifier le gain de haut-parleur commandé par les moyens de commande de gain en pondérant le gain de haut-parleur par les paramètres de modification.

Le procédé selon l'invention permet d'adapter les modifications de gain de haut-parleur commandés par l'usager au confort d'écoute de sorte qu'une modification de gain ne dégrade pas, et de préférence améliore le confort d'écoute lorsque celui-ci n'est pas bon. Les modifications de gain de haut-parleur commandées par l'usager sont pondérées en fonction du confort d'écoute. L'indice de confort d'écoute est en pratique d'autant plus faible que le confort d'écoute est élevé.

Le procédé de correction selon l'invention peut comprendre en outre au moins l'une des étapes de :

- lorsque le terminal téléphonique comprend un moyen annuleur d'écho acoustique traversé par les voies d'émission et de réception, mesurer dans la voie d'émission un signal d'entrée du moyen annuleur d'écho acoustique à comparer avec le signal d'émission mesuré, ledit signal d'émission mesuré étant mesuré en sortie du moyen d'annuleur d'écho acoustique, pour déterminer un gain d'annuleur d'écho acoustique entre les entrée et sortie de la voie d'émission dans le moyen annuleur d'écho acoustique,

- mesurer un signal en sortie de la voie d'émission et un signal en entrée de la voie de réception, et comparer les signaux mesurés en sortie de la voie d'émission et en entrée de la voie de réception pour déterminer un gain de trajet d'écho électrique entre la sortie de la voie d'émission et l'entrée de la voie de réception, de préférence concomitamment à l'étape de déterminer un gain de trajet d'écho acoustique, et

- lorsqu'un annuleur d'écho électrique côté ligne téléphonique est prévu en sortie de la voie d'émission et en entrée de la voie de réception, mesurer dans la voie de réception un signal de sortie du moyen annuleur d'écho électrique à comparer avec le signal mesuré en entrée de la voie de réception, ladite entrée de voie de réception correspondant à l'entrée du moyen annuleur d'écho électrique, pour déterminer un gain d'annuleur d'écho électrique entre les entrée et sortie de la voie de réception dans le moyen annuleur d'écho électrique, de préférence concomitamment à l'étape de déterminer un gain d'annuleur d'écho acoustique.

Le gain de stabilité est alors également déterminé en fonction du gain d'annuleur d'écho électrique, et/ou du gain de trajet d'écho acoustique, et/ou du gain d'annuleur d'écho électrique.

De préférence les paramètres de modification de gain sont constants dans une plage de variation quelconque de l'indice de confort d'écoute définie par deux des seuils prédéterminés. Les paramètres de modification de gain peuvent comprendre un pas d'augmentation, respectivement de diminution, de gain de haut-parleur qui varie inversement proportionnellement, respectivement proportionnellement à l'indice de confort d'écoute.

Les paramètres de modification du gain peuvent comprendre également une durée entre deux augmentations, respectivement diminutions, successives de gain de haut-parleur correspondant à deux commandes successives d'augmentation, respectivement de diminution, de gain de haut-parleur. La durée entre deux augmentations, respectivement diminutions, varie proportionnellement, respectivement inversement proportionnellement à l'indice de confort d'écoute.

En pratique, le procédé de correction selon l'invention comprend consécutivement à une commande d'augmentation, respectivement de diminution, du gain du haut-parleur les étapes de :

- vérifier si la commande d'augmentation, respectivement de diminution, est séparée de moins d'une durée de séparation prédéterminée d'une commande d'augmentation, respectivement de diminution, précédente, et

- dans l'affirmative, n'augmenter avec un pas d'augmentation prédéterminé, respectivement ne diminuer avec un pas de diminution déterminé, le gain de haut-parleur qu'après la durée d'augmentation, respectivement de diminution.

Selon une autre caractéristique de l'invention, le procédé de correction comprend l'étape d'afficher la valeur de l'indice de confort d'écoute en activant l'un de plusieurs premiers moyens d'affichage. Plus précisément, l'étape d'afficher la valeur de l'indice de confort d'écoute comprend :

- comparer l'indice de confort d'écoute à des seuils d'affichage inférieurs et supérieurs prédéterminés, lesdits seuils d'affichage inférieurs étant couplés respectivement aux seuils supérieurs pour définir des plages de variation de l'indice de confort d'écoute qui se chevauchent partiellement deux à deux, chaque plage de variation de l'indice de confort d'écoute étant associée à l'un des premiers moyens d'affichage,

- activer le premier moyen d'affichage associé à la plage de variation dans laquelle se trouve l'indice de confort tant que l'indice de confort est compris entre les seuils d'affichage inférieur et supérieur et définissant la plage de variation, et

- activer le premier moyen d'affichage de rang inférieur, respectivement supérieur, lorsque l'indice de confort sort de la plage de variation associée au moyen d'affichage activé par le seuil inférieur, respectivement supérieur définissant la plage de variation.

De préférence, les premiers moyens d'affichage sont de plusieurs couleurs, les longueurs d'onde desdites plusieurs couleurs étant croissantes avec l'indice de confort. A titre d'exemple, les premiers moyens d'affichage sont de couleur verte pour des premières plages de variation de l'indice de confort, de couleur jaune ou orangée pour des secondes plages de variation de l'indice de confort et de couleur rouge pour des troisièmes plages de variation de l'indice de confort. Le choix des couleurs incite l'usager local à diminuer le niveau d'écoute pour que l'indice de confort d'écoute demeure dans des plages pour lesquelles le confort d'écoute ressenti par l'usager local et l'usager distant est bon, c'est-à-dire sans sensation d'alternat.

Selon encore une autre caractéristique de l'invention, le procédé comprend l'étape d'afficher la valeur du gain de haut-parleur, lié au niveau d'écoute, par plusieurs seconds moyens d'affichage.

A l'étape d'afficher la valeur du gain de haut-parleur, les seconds moyens d'affichage affichent une valeur de gain supérieure à la valeur réelle du gain de haut-parleur lorsque l'indice de confort est supérieur à un seuil prédéterminé de décalage. De préférence, les seconds moyens d'affichage affichent l'une de plusieurs valeurs de gain supérieures

EP 0 812 504 B1

à la valeur réelle du gain de haut-parleur lorsque l'indice de confort est supérieur à l'un respectif de plusieurs seuils prédéterminés.

En outre, le procédé peut comprendre les étapes de :

- comparer l'indice de confort d'écoute à un quatrième seuil prédéterminé élevé, et
- diminuer le gain de haut-parleur d'une valeur prédéterminée lorsque l'indice de confort d'écoute est supérieur au quatrième seuil pendant une durée prédéterminée.

Dans ce cas, le gain de haut-parleur est modifié sans intervention de l'usager.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 est un bloc-diagramme d'un terminal téléphonique mains-libres;
- la figure 2 montre schématiquement un annuleur d'écho acoustique compris dans le terminal téléphonique de la figure 1;
- la figure 3 est un algorithme de commande de gains d'émission et de réception pour le terminal téléphonique;
- la figure 4 est un algorithme simplifié de compression de niveaux d'émission et de réception inclus dans l'algorithme de la figure 3;
- la figure 5 est un algorithme simplifié de sélection de signal dominant d'émission ou de réception inclus dans l'algorithme de la figure 3;
- la figure 6 est un algorithme de détermination d'un gain de stabilité inclus dans l'algorithme de la figure 3;
- la figure 7 est un moyen d'affichage de niveau d'écoute et de confort d'écoute dans le terminal téléphonique de la figure 1;
- la figure 8 est un algorithme de détermination de niveau d'écoute selon l'invention;
- la figure 9 est un algorithme d'augmentation de gain de haut-parleur selon l'invention;
- la figure 10 est un algorithme de diminution de gain de haut-parleur selon l'invention;
- la figure 11 est un algorithme de détermination de paramètres d'augmentation et de diminution de gain de haut-parleur selon l'invention;
- la figure 12 est un diagramme d'affichage d'un indice de confort d'écoute selon l'invention;
- la figure 13 est un diagramme de variation d'un pas d'augmentation de gain de haut-parleur en fonction de l'indice de confort d'écoute selon l'invention;
- la figure 14 est un diagramme de variation d'un pas de diminution de gain de haut-parleur en fonction de l'indice de confort d'écoute selon l'invention;
- la figure 15 est un diagramme de variation d'une temporisation d'augmentation de gain de haut-parleur en fonction de l'indice de confort d'écoute selon l'invention;
- la figure 16 est un diagramme de variation d'une temporisation de diminution de gain de haut-parleur en fonction de l'indice de confort d'écoute selon l'invention;
- la figure 17 est un diagramme d'affichage du niveau d'écoute en fonction de l'indice de confort d'écoute selon l'invention; et
- la figure 18 est un algorithme de diminution de gain de haut-parleur en fonction de l'indice de confort d'écoute selon l'invention.

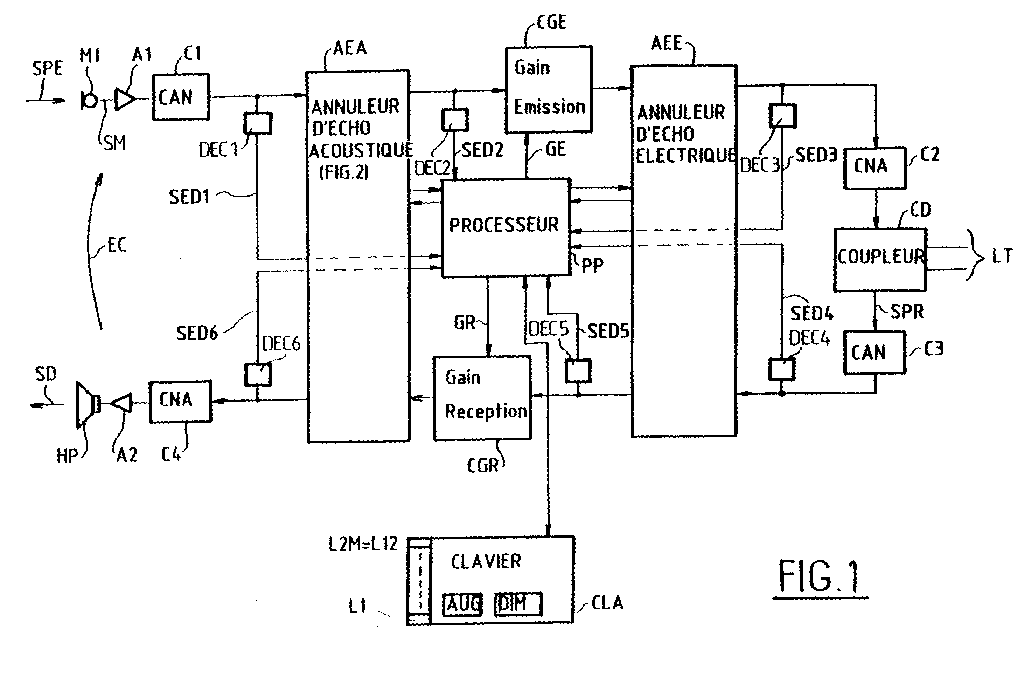

En référence à la figure 1, **un terminal téléphonique mains-libres** comprend une première voie de transmission, dite voie d'émission. La voie d'émission comprend un microphone MI, ou plusieurs microphones, relié(s) avec un amplificateur A1 et un convertisseur analogique-numérique C1. Une sortie du convertisseur C1 est reliée à une première entrée d'un circuit annuleur d'écho acoustique AEA dont une première sortie est reliée à un circuit de commande de gain d'émission CGE. Le circuit de commande de gain d'émission CGE est relié à une première entrée d'un circuit annuleur d'écho électrique AEE. Une première sortie du circuit AEE est reliée à une ligne téléphonique analogique LT à 2 fils du réseau téléphonique à travers un convertisseur numérique-analogique C2 suivi d'un coupleur différentiel 4 fils / 2 fils CD.

Une seconde voie de transmission du terminal téléphonique constitue une voie de réception de sens contraire à la voie d'émission et comprend en sortie du coupleur différentiel CD un convertisseur analogique-numérique C3 relié à une seconde entrée du circuit annuleur d'écho électrique AEE. Une seconde sortie du circuit AEE est reliée à travers un circuit de commande de gain de réception CGR à une seconde entrée du circuit annuleur d'écho AEA. Une seconde sortie du circuit AEA est appliquée à un convertisseur numérique-analogique C4 suivi par un amplificateur A2 et un haut-parleur HP, ou plusieurs haut-parleurs.

Lorsque le terminal est raccordé à une ligne téléphonique à 4 fils, il ne comprend pas de coupleur différentiel

4

CD.

En outre, l'invention concerne également un terminal mains-libres ne comprenant pas de circuit annuleur électrique et/ou de circuit annuleur d'écho acoustique, quel que soit le type de ligne téléphonique auquel il est raccordé, 2 fils ou 4 fils, analogique ou numérique.

Le terminal comprend un clavier CLA à la disposition de l'usager. Le clavier CLA comprend des touches alphanumériques notamment pour composer le numéro téléphonique d'un usager distant à appeler, et des touches pour basculer du fonctionnement en mains-libres au fonctionnement avec l'écouteur et le microphone du combiné, pour interrompre l'un des sens de transmission ("secret" haut-parleur ou microphone), ainsi que des touches AUG et DIM pour augmenter et diminuer le gain du haut-parleur HP.

Dans le terminal mains-libres, un processeur pilote PP commande le circuit annuleur d'écho acoustique AEA, le circuit annuleur d'écho électrique AEE et les circuits de commande de gains d'émission et de réception CGE et CGR. Les commandes de gains d'émission et de réception sont réalisées suivant un algorithme détaillé dans la suite.

Le terminal mains-libres comprend en outre six détecteurs d'enveloppe-crête DEC1 à DEC6. Dans la voie d'émission, les entrées des détecteurs DEC1 et DEC2 sont reliées respectivement à la première entrée et à la première sortie du circuit annuleur d'écho acoustique AEA et l'entrée du détecteur DEC3 est reliée à la première sortie du circuit annuleur d'écho électrique AEE. Dans la voie de réception les entrées des détecteurs DEC4 et DEC5 sont reliées respectivement à la seconde entrée et à la seconde sortie du circuit annuleur d'écho électrique AEE et l'entrée du détecteur DEC6 est reliée à la seconde sortie de l'annuleur d'écho acoustique AEA.

Un détecteur d'enveloppe-crête DECi, i étant un entier compris entre 1 et 6, comprend un détecteur double alternance suivi d'un filtre non linéaire ayant une constante de temps très faible pour une augmentation du niveau du signal à détecter, un temps de maintien, et une constante de temps plus grande lors d'une diminution du niveau.

Les détecteurs d'enveloppe-crête DEC1 à DEC6 appliquent respectivement des signaux d'enveloppe-crête SEDI à SED6 au processeur pilote PP.

En pratique, le signal d'enveloppe-crête SEDi est sous-échantillonné, par exemple à une fréquence de 1 kHz, par rapport au signal à détecter, typiquement échantillonné à une fréquence de 8 kHz dans les convertisseurs C1 et C3.

La voie de réception reçoit un signal SPR combinant un signal de parole d'un usager distant à travers le réseau téléphonique et la ligne téléphonique LT, et un signal d'écho électrique résultant d'un couplage électrique entre le sens émission et le sens réception à travers le coupleur CD, pour diffuser le signal SPR en un signal diffusé SD par le haut-parleur HP. La voie d'émission reçoit par le microphone MI un signal microphonique SM combinant un signal de parole SPE d'usager local et un signal d'écho acoustique EC résultant d'un couplage acoustique entre le haut-parleur HP et le microphone MI.

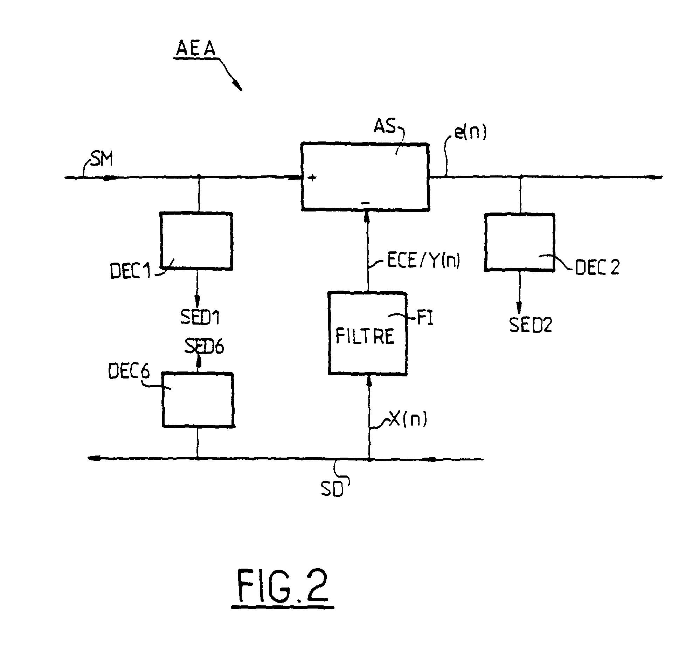

En référence à la figure 2, le circuit annuleur d'écho acoustique AEA comprend classiquement un filtre transversal FI à I étages, où I vaut 1536 à titre d'exemple. Le filtre estime l'écho acoustique EC en un écho acoustique estimé ECE par un algorithme d'identification adaptative d'écho connu en soi. L'écho acoustique estimé ECE est appliqué à une entrée "-" d'un additionneur-soustracteur AS dont une entrée "+" reçoit le signal microphonique SM numérisé par le convertisseur C1.

Plus précisément, le filtre FI reçoit des échantillons X(n) du signal à diffuser SD fournis par le circuit de commande de gain de réception CGR et calcule des échantillons Y(n) de l'écho acoustique estimé ECE selon la relation :

$$Y(n) = \sum_{i=0}^{I-1} h_n(i).X(n-i).$$

Selon la réalisation préférée, les coefficients $h_n(i)$ représentent une fonction de corrélation H à un instant n et sont déterminés par la relation :

$$h_{n+1}(i) = h_n(i) + K(n).X(n-i).e(n) ,$$

dans laquelle K(n) dénote un facteur de vitesse de convergence à l'instant n qui est calculé dans le processeur pilote PP, et e(n) est un signal d'erreur d'estimation en l'absence de signal SPE.

Le circuit annuleur d'écho électrique AEE est analogue au circuit annuleur d'écho acoustique AEA. L'écho électrique résulte de la contribution du signal transmis dans le sens émission dans le signal transmis dans le sens réception à travers le coupleur différentiel CD.

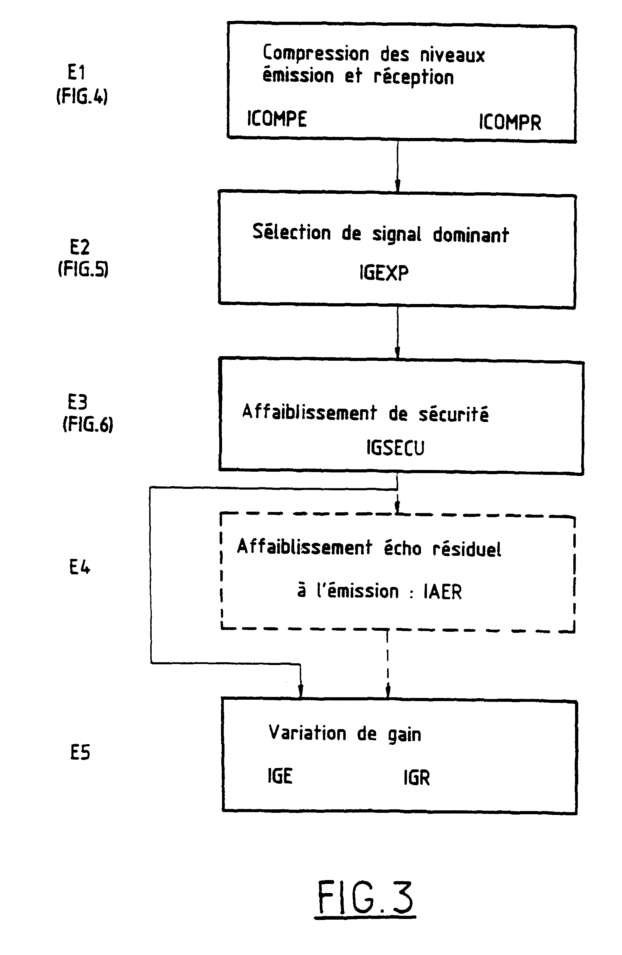

En référence à la figure 3, un **algorithme de commande de gains d'émission et de réception** comprend cinq étapes principales E1 à E5. L'algorithme de contrôle de gains est implanté dans le processeur pilote PP. Les étapes E1 à E5 sont effectuées cycliquement, par exemple à la fréquence d'échantillonnage des détecteurs d'enveloppe-crête, soit par exemple 1 kHz. Dans la suite, un gain exprime un rapport entre deux valeurs numériques de signal à comparer pouvant être plus petit ou plus grand que l'unité, et le plus souvent positif. En pratique, un gain est le plus souvent compris entre 0 et 1. Un gain est associé à un indice qui exprime le gain sur une échelle logarithme par exemple par unité de -0,5 dB. Lorsqu'un gain vaut 1, l'indice associé est égal à 0.

L'étape E1 est la régulation des niveaux des signaux SM et SPR dans les voies d'émission et de réception. Le niveau dans la voie d'émission dépend notamment de la position du ou des locuteurs locaux par rapport au microphone MI. Le niveau réception dépend notamment de la longueur de la ligne de transmission à 2 fils LT. Les signaux d'émission et de réception SM et SPR ont des niveaux moyens qui peuvent être très différents entre eux, et variables au cours d'une conversation téléphonique. La régulation des niveaux des signaux d'émission et de réception consiste en un affaiblissement, dit également compression de signaux.

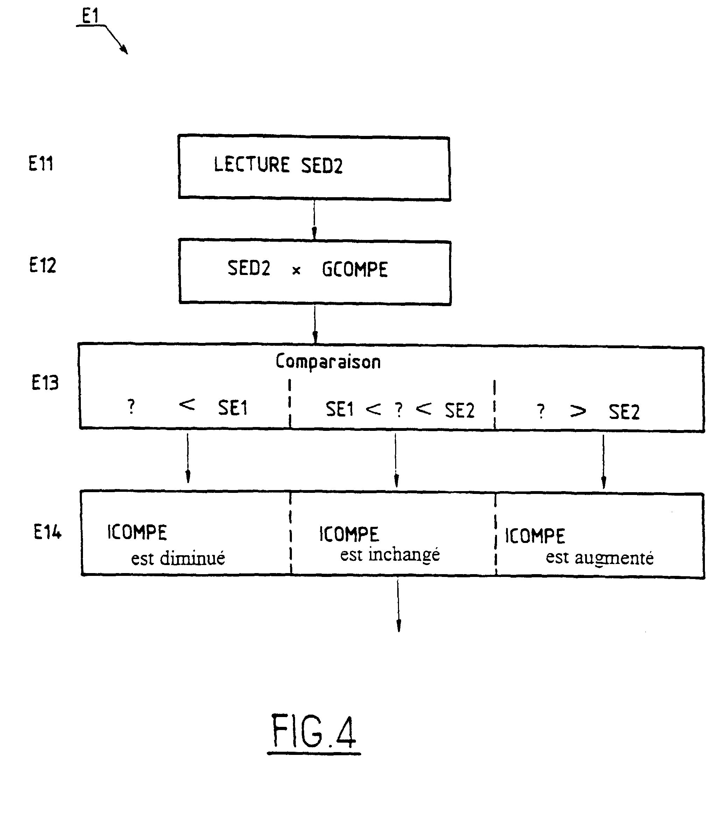

L'étape E1 est composée de quatre sous-étapes E11 à E14 qui sont décrites pour la voie d'émission en référence à la figure 4.

Dans la voie d'émission, le détecteur DEC2 applique un signal d'enveloppe-crête détecté SED2 au processeur PP. Le processeur lit le signal SED2 à la sous-étape E11 et multiplie à la sous-étape E12 le signal SED2 par un gain de compression à l'émission GCOMPE pour que le produit SED2.GCOMPE soit compris dans une plage de variation définie par deux seuils prédéterminés SE1 et SE2. Un indice de compression à l'émission ICOMPE est associé au gain GCOMPE. L'indice entier ICOMPE exprime le gain par unité de -0,5 dB.

A la sous-étape E13, le signal SED2.GCOMPE est comparé avec les seuils SE1 et SE2. L'indice ICOMPE est augmenté ou diminué ou demeure inchangé à la sous-étape E14 en fonction du résultat de la comparaison de la sous-étape E13. Ainsi, si le signal SED2.GCOMPE est supérieur au plus grand des deux seuils, soit SE2, l'indice ICOMPE est augmenté d'une première valeur prédéterminée. Si le signal SED2.GCOMPE est inférieur au plus petit des deux seuils, soit SE1, l'indice ICOMPE est diminué d'une seconde valeur prédéterminée. Enfin, si le produit SED2.GCOMPE est compris entre les deux seuils, l'indice ICOMPE est inchangé.

De manière analogue, dans la voie de réception, le détecteur DEC5 applique un signal d'enveloppe-crête détecté SED5 au processeur PP. Le signal SED5 est multiplié par un gain de compression à la réception GCOMPR et le produit résultant est comparé à deux seuils prédéterminés SR1 et SR2. En fonction du résultat de la comparaison, un indice de compression à la réception ICOMPR, exprimant le gain GCOMPR par unité de -0,5 dB, est augmenté ou diminué, ou encore demeure inchangé.

L'étape E1 a pour résultat les indices de compression à l'émission et à la réception ICOMPE et ICOMPR.

En référence à nouveau à la figure 3, le processeur pilote PP sélectionne à l'étape E2 le sens de transmission dominant, c'est-à-dire la voie d'émission ou de réception qui présente le signal utile, généralement de parole, le plus élevé. L'étape E2 comprend trois sous-étapes E21 à E23.

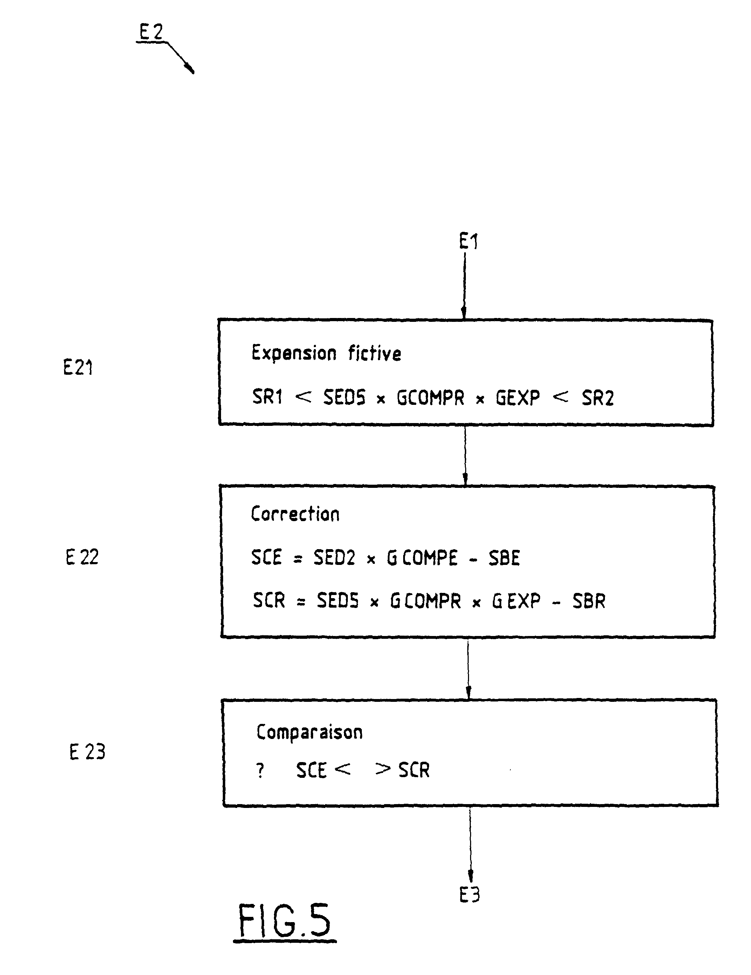

En référence à la figure 5, la sous-étape E21 est une compensation supplémentaire appliquée à la voie de réception pour tenir compte de grands affaiblissements par la ligne LT. La sous-étape E21 détermine un indice entier d'expansion fictive IGEXP compris par exemple entre 0 et 24, exprimé par unité de -0,5 dB auquel correspond un gain d'expansion fictive GEXP. L'indice IGEXP est déterminé pour que la relation

$$SR1 < SED5.GCOMPR.GEXP < SR2$$

soit vérifiée avec une constante de temps plus grande que la relation

$$SR1 < SED5.GCOMPR < SR2$$

à la sous-étape correspondante E13 de manière à ce que l'indice IGEXP ne prenne en compte que les changements de niveau dus à la longueur de la ligne et non pas à d'éventuels changements d'élocution pris en compte par l'indice ICOMPR. L'expansion fictive dépend de la ligne téléphonique, notamment de son affaiblissement linéique, et non du signal de réception.

La sous-étape E22 corrige le signal SED2.GCOMPE, SED5.GCOMPR.GEXP en un signal corrigé SCE, SCR afin de s'affranchir des niveaux de bruit pour l'étape suivante. Pour cela, à la sous-étape E22, un seuil de bruit respectif SBE, SBR, calculé dans le processeur pilote PP, est soustrait du signal SED2.GCOMPE, SED5. GCOMPR.GEXP.

La sous-étape E23 compare les niveaux de signal d'émission corrigé SCE et de signal de réception corrigé SCR pour déterminer le signal dominant et ainsi la voie de transmission dominante. Afin d'accroître la stabilité de la sélection de la voie dominante, les basculements entre voie dominante de transmission et voie dominée de transmission sont réalisés suivant un cycle d'hystérésis.

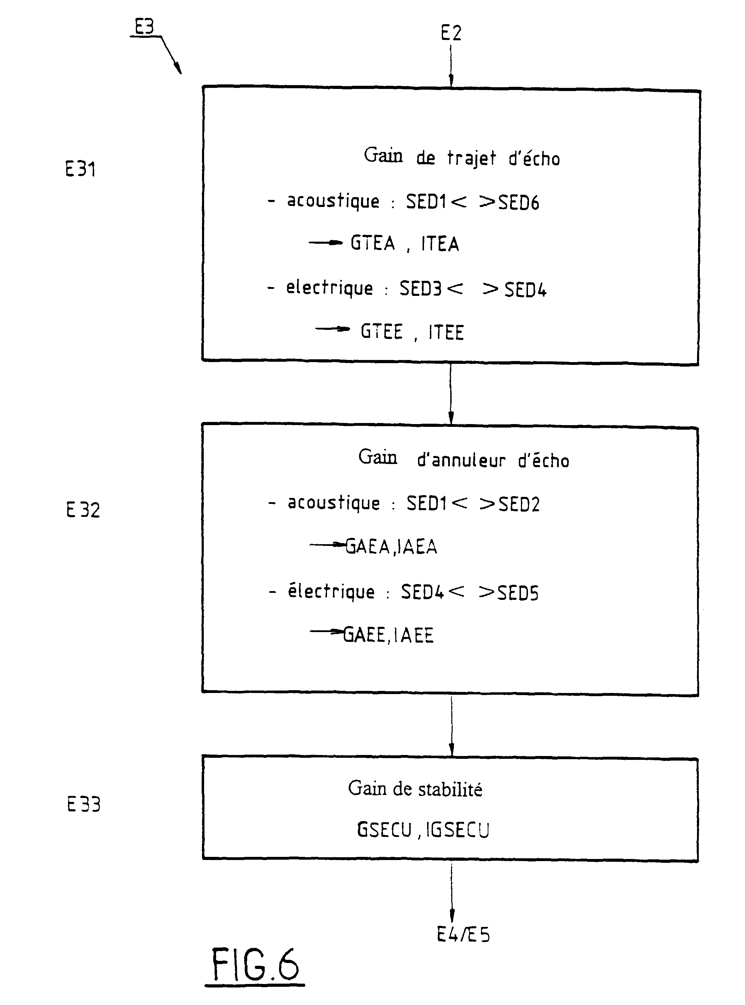

En référence aux figures 1, 2 et 6, l'étape E3 de détermination d'un gain de stabilité comprend trois sous-étapes E31 à E33. Le gain de stabilité apporte un affaiblissement de sécurité.

A la sous-étape E31, des signaux d'enveloppe-crête SED1 et SED6 délivrés par les détecteurs DEC1 et DEC6 sont comparés pour déterminer un gain de trajet d'écho acoustique GTEA et un indice entier associé ITEA exprimé par unité de -0,5 dB. De même, des signaux d'enveloppe-crête SED3 et SED4 délivrés par les détecteurs DEC3 et DEC4 sont comparés pour déterminer un gain et un indice entier associés d'affaiblissement de trajet d'écho électrique GTEE et ITEE.

A la sous-étape E32, les signaux d'enveloppe-crête SED1 et SED2, SED4 et SED5, délivrés par les détecteurs DEC1 et DEC2, DEC4 et DEC5 sont comparés respectivement pour déterminer des gains et des indices d'affaiblissement d'annuleur d'écho acoustique et électrique GAEA, IAEA et GAEE, IAEE.

La sous-étape E33 vise à éviter un effet Larsen et à stabiliser le système comprenant les deux terminaux chez les usagers local et distant, en déterminant un gain de stabilité GSECU associé à un indice entier d'affaiblissement de sécurité IGSECU dépendant de la relation suivante :

$$IGSECU + IGHP + ICOMPE + ICOMPR + ITEA + ITEE + IAEA + IAEE > ISECU.$$

Si cette relation est vérifiée, alors l'indice IGSECU est diminué d'une unité. Dans la relation précédente, ISECU est un seuil entier déterminé expérimentalement et IGHP est un indice entier de gain de haut-parleur associé à un gain de haut-parleur GHP. Le gain de haut-parleur GHP a une valeur initiale égale par exemple à 9 dB, et est modifié par l'usager local en appuyant sur les touches AUG et DIM, comme exposé dans la suite.

Si la relation précédente n'est pas vérifiée, alors l'indice IGSECU est augmenté d'une unité.

Selon une première réalisation, l'algorithme passe directement de l'étape E3 à l'étape E5. L'étape E5 détermine les gains GE et GR appliqués aux signaux d'émission et de réception par les circuits de commande de gain d'émission CGE et de réception CGR. Les gains GE et GR dépendent de la voie de réception ou d'émission qui supporte le signal de parole dominant déterminé à la sous-étape E23. Des indices entiers de gain IGE et IGR sont associés aux gains GE et GR. Si le signal dominant est dans la voie d'émission, c'est-à-dire si SCE > SCR, les indices IGE et IGR sont alors déterminés par les relations :

$$IGE = ICOMPE$$

$$IGR = ICOMPR + IGHP + IGSECU .$$

Inversement, si le signal dominant est dans la voie de réception, c'est-à-dire si SCR > SCE, les indices IGE et IGR sont déterminés par les relations

$$IGE = ICOMPE + IGSECU$$

$$IGR = ICOMPR + IGHP .$$

Selon une seconde réalisation, l'algorithme détermine en outre un indice entier d'affaiblissement d'écho résiduel IAER à l'étape E4, entre les étapes E3 et E5. L'indice IAER gère un affaiblissement d'un écho résiduel dans la voie d'émission qui est susceptible d'être perçu par l'usager distant. Si la relation suivante est vérifiée :

$$IAER + IGHP + IGSECU + ICOMPE + ICOMPR + ITEA + IAEA > IECHO,$$

alors l'indice d'affaiblissement d'écho résiduel IAER est diminué d'une unité. Sinon, l'indice IAER est augmenté d'une unité. L'indice IECHO est un seuil déterminé expérimentalement.

De préférence, l'indice IAER n'est déterminé que si l'indice d'affaiblissement d'écho acoustique IAEA déterminé à la sous-étape E32 est supérieur à un seuil déterminé.

Ainsi, lorsque l'indice IAER est déterminé à l'étape E4, l'étape E5 détermine les indices de gain d'émission et de réception IGE et IGR suivant les relations :

$$IGE = ICOMPE$$

$$IGR = ICOMPR + IGHP + IGSECU,$$

si le signal d'émission est dominant, et suivant les relations :

$$IGE = ICOMPE + IGSECU + IAER$$

$$IGR = ICOMPR + IGHP,$$

si le signal de réception est dominant. En effet, l'écho résiduel n'est susceptible d'être perçu que lorsque le signal de réception est suffisamment grand, et donc dominant. L'indice IAER est alors ajouté.

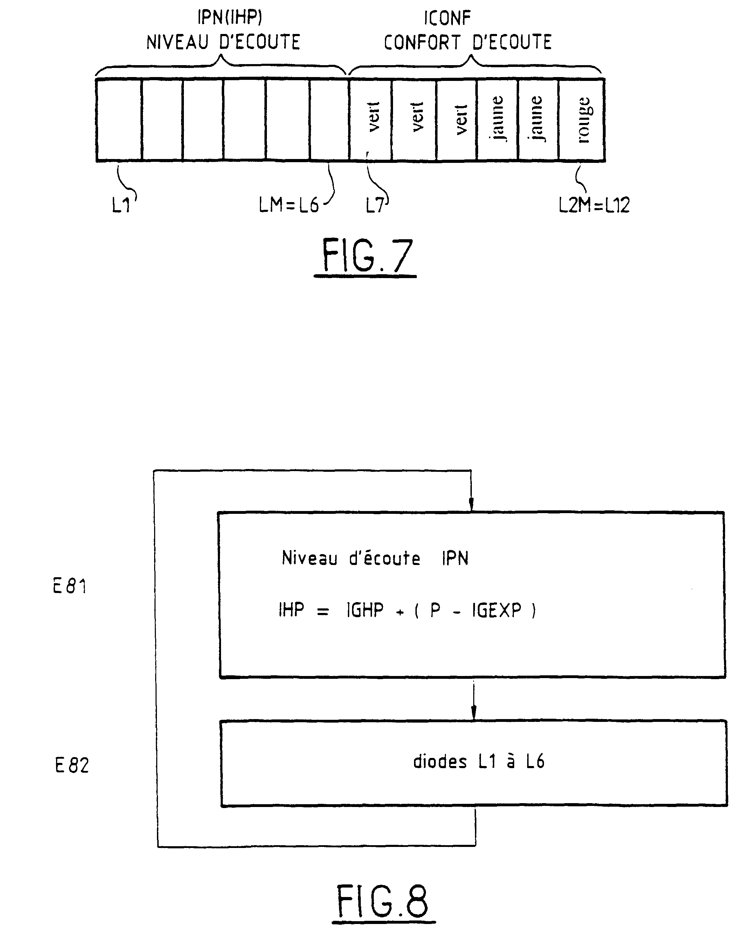

En référence à la figure 7, **un panneau d'affichage du terminal téléphonique mains-libres** est destiné à l'usager et comprend 2M diodes électroluminescentes L1 à L2M, M étant un entier par exemple égal à 6. Le panneau d'affichage est par exemple lié au clavier CLA et comprend d'autres diodes, telles que diode indiquant par exemple l'activation de la touche "secret".

Un premier groupe de diodes, par exemple L1 à LM = L6, fournit à l'usager une indication de niveau d'écoute. Un second groupe de diodes, par exemple L(M+1) = L7 à L2M = L12 fournit à l'usager une indication de confort d'écoute. Les nombres de diodes comprises dans les groupes sont arbitraires et peuvent être différents entre eux. De préférence, les diodes de niveau d'écoute L1 à L6 sont toutes de la même couleur. En revanche, les diodes de confort d'écoute L7 à L12 ont des couleurs différentes entr'elles. Par exemple, la diode L12 est rouge, les diodes L10 et L11 sont jaunes ou orangées et les diodes L7 à L9 sont vertes. Selon une variante de réalisation, les diodes L1 à L12 sont remplacées par un écran à cristaux liquides comprenant soit des chiffres, soit des pavés juxtaposés symbolisant des curseurs en vis à vis d'une échelle graduée.

En référence à la figure 8, le processeur PP allume les diodes de niveau d'écoute L1 à LM = L6 en fonction du gain de haut-parleur GHP et du gain d'expansion fictive GEXP calculé à la sous-étape E23, selon deux étapes cycliques E81 et E82. A cette fin, un indice IHP relatif à une intensité sonore fournie par le haut-parleur HP est calculé à l'étape E81 par la relation :

$$IHP = IGHP + (P - IGEXP),$$

P étant un entier correspondant à la valeur maximale de IGEXP, égale à 24 à titre d'exemple. L'indice IHP est exprimé par unité de -0,5 dB. L'intensité sonore est maximale si IHP est nul, et décroît de 0,5 dB lorsque IHP augmente d'une unité.

Un indice de plage de niveau IPN est égal à l'une de six valeurs discrètes 1 à M = 6 en fonction de la valeur de l'indice IHP suivant les relations :

$$\text{si } 24 \leq IHP \qquad \text{alors } IPN = 1$$

$$18 \leq IHP < 24 \qquad \text{alors } IPN = 2$$

$$12 \leq IHP < 18 \qquad \text{alors } IPN = 3$$

$$8 \leq IHP < 12 \qquad \text{alors } IPN = 4$$

$$4 \leq IHP < 8 \qquad \text{alors } IPN = 5$$

$$0 \le IHP < 4 \qquad \text{alors } IPN = 6 = M$$

L'indice de plage de niveau IPN dépend du gain de haut-parleur et représente le niveau sonore fournit par le haut-parleur HP. En fonction de la valeur 1 à 6 de l'indice IPN, la diode respective L1 à L6 est activée, c'est-à-dire est allumée, à l'étape E82. La diode L1 est activée lorsque IPN vaut 1, la diode L2 pour IPN égal à 2, et ainsi de suite.

L'usager augmente ou diminue le gain de haut-parleur GHP en appuyant sur la touche AUG ou DIM du clavier CLA. En conséquence, l'état des diodes L1 à L6 est modifié en fonction de la valeur de l'indice IPN calculé avec la nouvelle valeur de l'indice IGHP. Lorsque l'usager appuie sur la touche AUG, respectivement DIM, la diode de rang supérieur, respectivement inférieur, à la diode courante allumée, clignote si la diode courante allumée n'est pas la diode L6, respectivement L1. Une diode de niveau d'écoute est activée jusqu'à ce qu'une nouvelle valeur de l'indice IPN soit déterminée et qu'en conséquence une autre diode soit activée.

Selon une variante, une diode de niveau d'écoute demeure activée quelques secondes à la suite de l'appui par l'usager sur la touche AUG ou DIM.

Selon une autre variante, pour une valeur de IPN donnée, par exemple 3, toutes les diodes ayant des rangs inférieurs et égal à la valeur de l'indice IPN sont activées, soit les diodes L1, L2 et L3 dans cet exemple.

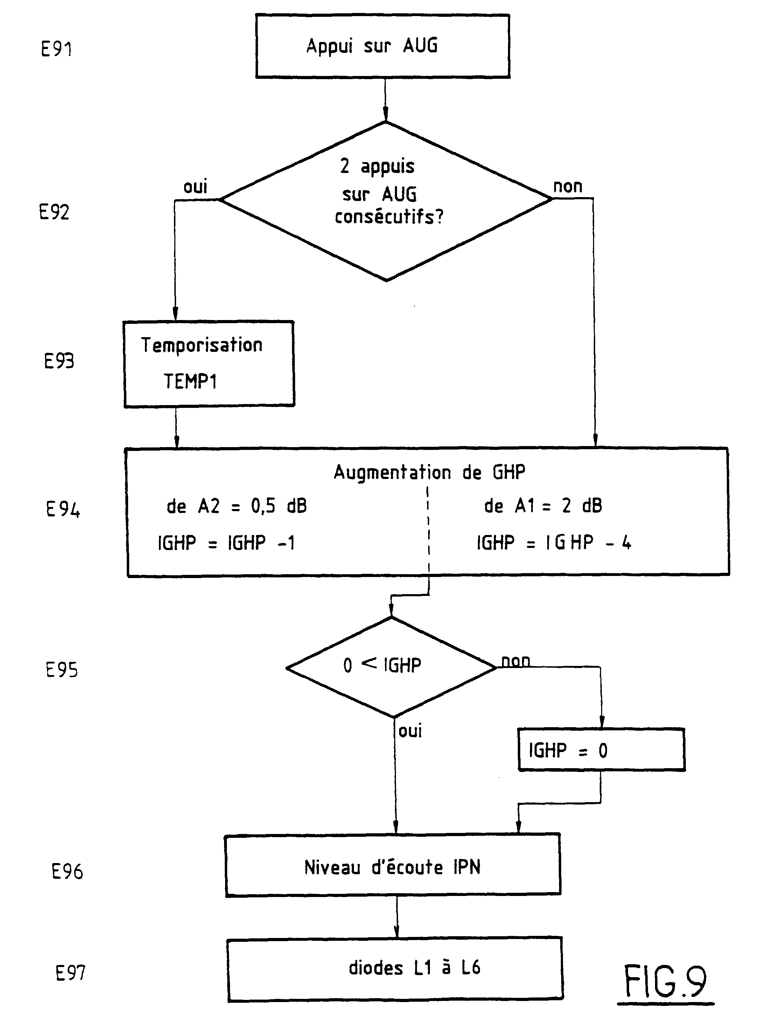

En référence à la figure 9, un **algorithme d'augmentation du gain de haut-parleur** GHP comprend sept étapes E91 à E97. L'usager appuie sur la touche AUG du clavier du terminal téléphonique à l'étape E91. L'étape E92 contrôle si l'appui est isolé ou s'il est consécutif à un appui précédent sur la touche AUG séparé de moins d'une durée de séparation prédéterminée, correspondant par exemple au cas où l'usager maintient la touche AUG enfoncée. Si l'appui sur la touche AUG est isolé, l'étape E94 augmente le gain de haut-parleur GHP d'un pas prédéterminé A1, par exemple de 2 dB, et donc décrémente de 4 l'indice IGHP. Si l'appui sur la touche AUG succède à un appui précédent séparé d'une durée inférieure à la durée de séparation prédéterminée, par exemple égale à une seconde, l'étape E93 déclenche une temporisation prédéterminée TEMP1 de l'ordre de O,25 à une seconde. Après la temporisation TEMP1, l'étape E94 augmente le gain GHP d'un pas prédéterminé A2, par exemple 0,5 dB, et donc décrémente l'indice IGHP d'une unité. Comme exposé dans la suite, les paramètres A1 et TEMP1 sont déterminés en fonction du confort d'écoute.

L'étape E95 est un contrôle de la variation de l'indice IGHP qui doit demeurer entre deux valeurs limites prédéterminées, par exemple 0 et IGHPMAX. Si l'indice IGHP calculé sort de cette plage, en l'occurrence par valeur inférieure, la valeur limite "0" lui est affectée.

A l'issu de l'étape E95 la valeur de l'indice IGHP est déterminée.

L'étape E96 calcule l'indice de plage de niveau IPN comme précédemment décrit en référence à l'étape E81. En fonction de la valeur de l'indice IPN, l'une des diodes L1 à LM = L6 est allumée à l'étape E97 pour indiquer à l'usager le nouveau niveau d'écoute résultant de son action sur la touche AUG. Les étapes E96 et E97 sont identiques aux étapes E81 et E82.

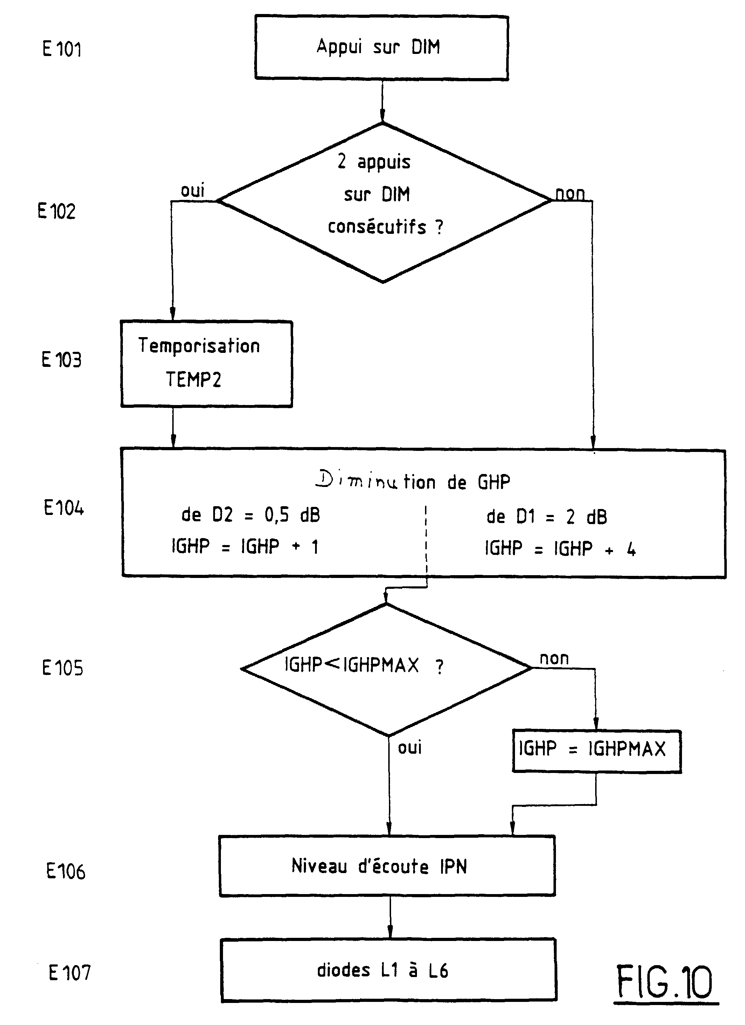

Selon la figure 10, **un algorithme de diminution du gain de haut-parleur** GHP consécutivement à l'appui sur la touche DIM du clavier par l'usager comprend sept étapes E101 à E107 respectivement analogues aux étapes E91 à E97.

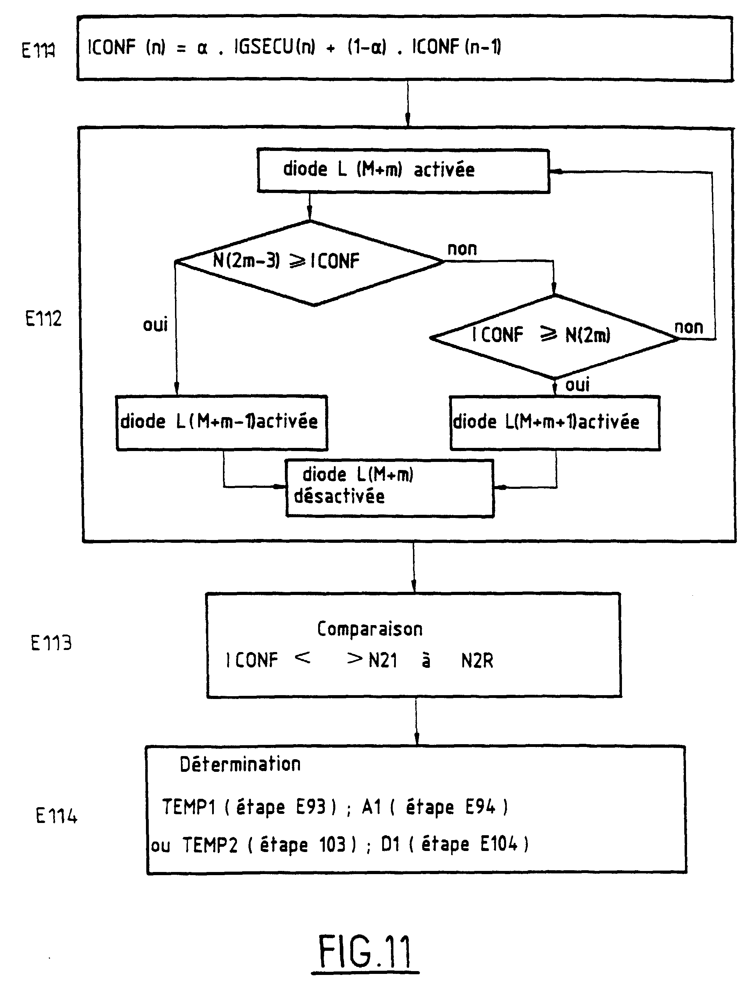

L'étape E101 consiste en l'appui sur la touche DIM proprement dit. Comme pour l'incrémentation (figure 9), l'algorithme distingue le cas de l'appui isolé et le cas de l'appui consécutif à un appui précédent séparé de moins d'une durée de séparation prédéterminée. Dans le premier cas, le gain GHP est diminué d'un pas prédéterminé D1, par exemple égal à 2 dB et l'indice IGHP est augmenté de 4 (étape E104). Dans le second cas, le gain de haut-parleur GHP est diminué d'un pas prédéterminé D2, par exemple égal à 0,5 dB et l'indice IGHP est augmenté d'une unité (étape E104) après une temporisation prédéterminée TEMP2 (étape E103) égale à ou différente de TEMP1. Comme exposé dans la suite (figure 11), les paramètres D1 et TEMP2 sont déterminés en fonction du confort d'écoute.

L'étape E105 contrôle que l'indice IGHP est compris entre les deux valeurs limites prédéterminées "0" et IGHPMAX. Si l'indice IGHP sort de cette plage, en l'occurrence par valeur supérieure, la valeur limite IGHPMAX lui est affectée.

En référence à la figure 11, un **algorithme de détermination de paramètres d'augmentation et de diminution de gain de haut-parleur** comprend quatre étapes cycliques E111 à E114.

L'étape E111 consiste en la détermination d'un indice de confort d'écoute ICONF. L'indice de confort d'écoute ICONF est obtenu à l'instant n par un filtrage passe-bas de l'indice d'affaiblissement de sécurité IGSECU déterminé à la sous-étape E33, par la relation :

$$ICONF(n) = \alpha.\ IGSECU(n) + (1-\alpha).ICONF(n - 1),$$

dans laquelle $\alpha$ est un coefficient par exemple égal à 1/32, et ICONF(n-1) est l'indice de confort déterminé à l'instant précédent n-1. L'indice de confort d'écoute est déterminé cycliquement par exemple à la fréquence d'échantillonnage des détecteurs d'enveloppe-crête DEC1 à DEC6. La valeur de l'indice de confort d'écoute déterminée à un instant donné n est mémorisée jusqu'à l'instant suivant n+1. Dans la suite, pour simplifier les notations, l'indice de confort ICONF(n) est noté ICONF. Le confort d'écoute de l'usager est maximum si l'indice de confort ICONF est nul, et diminue lorsque l'indice ICONF augmente.

A l'étape E112, l'indice de confort ICONF est comparé à des premiers seuils, dits seuils d'affichage, N1 à NQ, où Q est un entier dépendant du nombre M de diodes d'indice de confort L(M+1) à L2M selon la relation Q = 2(M-1), et égal à 1O lorsque M est égal à 6 selon l'exemple illustré. Le résultat des comparaisons de l'indice ICONF avec les premiers seuils est affiché en activant l'une des diodes L7 à L2M = L12, comme expliqué ci-après.

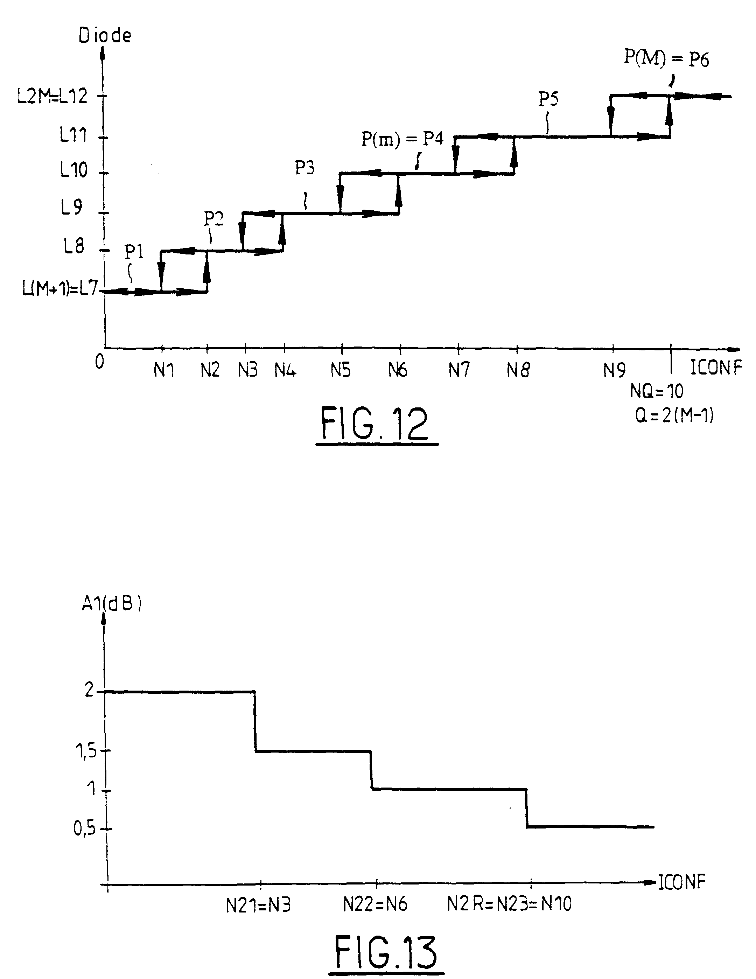

Selon la figure 12, les seuils d'affichage N1 à N10 sont associés deux par deux pour définir des plages de variation P1 à P(M) = P6 de l'indice de confort ICONF qui se chevauchent partiellement deux à deux. Chaque plage de variation est un palier associé à l'une des diodes L7 à L12. Ainsi, les diodes L7 à L12 sont activées progressivement suivant les paliers définis par les premiers seuils N1 à N1O et terminés par des cycles d'hystérésis. Une diode donnée L(M+m), m étant un entier compris entre I et M, par exemple la diode L1O, demeure activée tant que l'indice ICONF est compris dans la plage P(m) limitée par deux premiers seuils respectifs N(2m-3) = N5 et N(2m) = N8 qui définissent les limites du palier associé à la diode L(M+m) entre lesquelles sont compris deux autres seuils N(2m-2) = N6 et N (2m-1) = N7. Lorsque l'indice ICONF franchit le premier seuil inférieur, la diode de rang inférieur L(M+m-1) = L9 est activée et ne sera désactivée notamment que lorsque l'indice ICONF franchit le premier seuil supérieur N(2m-2) = N6 associé à la diode L(M+m-1) = L9 et supérieur au premier seuil inférieur N(2m-3)=N5 de la diode L(M+m)=L10. De même, lorsque la diode L(M+m) = L10 est activée, puis l'indice ICONF franchit le premier seuil supérieur N(2m) = N8, la diode de rang supérieur L(M+m+1) = L11 est activée et ne sera désactivée notamment que lorsque l'indice ICONF franchit le premier seuil inférieur N(2m-1) = N7 associé à la diode L(M+m+1) = L11 et inférieur au premier seuil supérieur N(2m) = N8 de la diode L(M+m) = L10.

Les longueurs des paliers, c'est-à-dire des différences entre premiers seuils inférieur et supérieur des diodes, et les largeurs des cycles d'hystérésis, c'est-à-dire les différences entre premier seuil inférieur d'une diode et premier seuil supérieur d'une diode précédente sont a priori différentes entr'elles respectivement.

Comme il apparaît à la figure 12, le rang de la diode activée croît avec l'indice de confort d'écoute, c'est-à-dire lorsque le confort d'écoute se dégrade. Ainsi, les diodes vertes L7 à L9 associées aux plages P1 à P3 indiquent un bon confort, les diodes jaunes ou orangées L10 et L11 associées aux plages P4 et P5 indiquent un confort moyen et la diode rouge L12 associée à la plage P6 indique un mauvais confort. Les couleurs de diodes de longueurs d'onde croissant avec l'indice de confort incitent l'usager à diminuer le gain de haut-parleur en appuyant sur la touche DIM pour que les diodes de rangs supérieurs ne demeurent pas allumées.

L'étape E113 compare l'indice de confort à des seconds seuils N21 à N2R définissant des plages de variation adjacentes d'indice de confort d'écoute ICONF. Les seconds seuils sont a priori différents des premiers seuils N1 à NQ et l'indice R différent de Q. Cependant pour des raisons pratiques, ils peuvent être choisis égaux aux premiers seuils, ou à certains d'entr'eux si les seconds seuils sont moins nombreux que les premiers seuils.

En fonction du résultat des comparaisons à l'étape E113, l'étape E114 détermine les valeurs du pas d'augmentation de gain A1, du pas de diminution de gain D1 et des temporisations TEMP1 et TEMP2.

En variante, les seconds seuils sont différents entr'eux pour les plages de variation utilisées pour déterminer le pas d'augmentation de gain A1, le pas de diminution de gain D1 et les temporisations TEMP1 et TEMP2, soit au total quatre jeux de seconds seuils.

Dans tous les cas, les paramètres A1, D1, TEMP1 et TEMP2 déterminés à l'étape E114 sont utilisés lorsque l'usager appuie sur la touche AUG (étape E91) ou la touche DIM (étape E101) pour calculer l'augmentation ou la diminution du gain GHP (étapes E93 et E94, ou E103 et E104).

En référence aux figures 13 à 16, R = 3 seconds seuils N21 à N2R=N23 ont été choisis égaux à N3, N6 et N10 respectivement. Les seconds seuils définissent quatre plages de variation de l'indice de confort ICONF, à chacune desquelles sont associés des paliers respectifs de pas d'augmentation de gain A1, de pas de diminution de gain D1 et de temporisations TEMP1 et TEMP2.

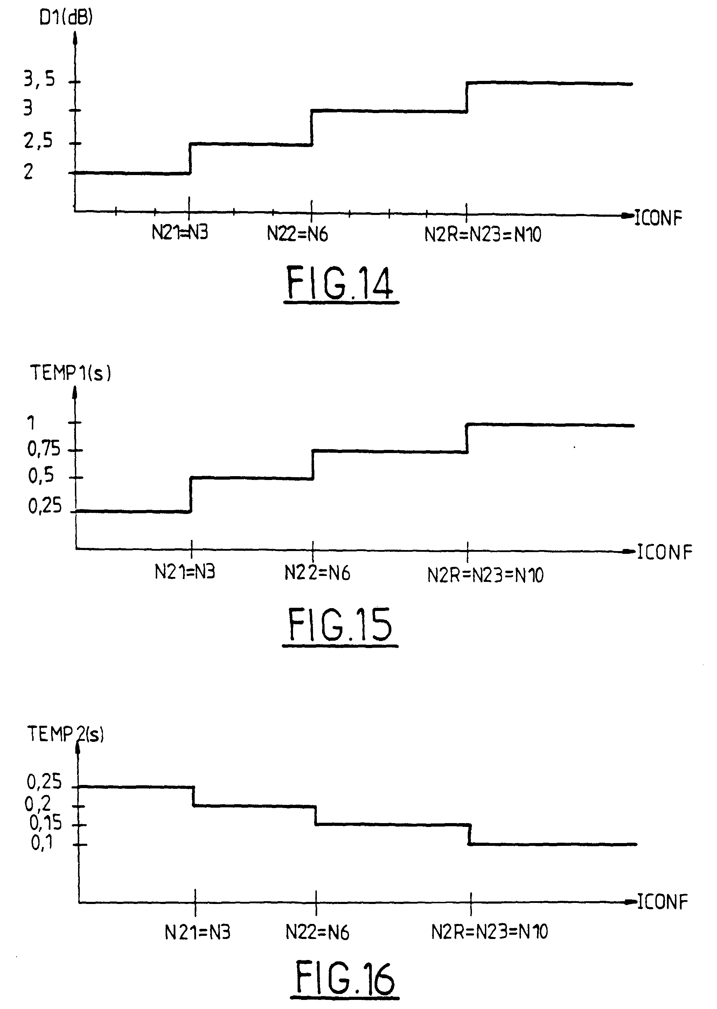

Ainsi, selon les figures 13 et 15, plus l'indice de confort est petit et le confort d'écoute est meilleur, plus le pas d'augmentation de gain A1 est grand, et la temporisation TEMP1 faible, ce qui permet à l'usager une action sur le gain de haut-parleur GHP de plus grande amplitude et plus rapide lorsqu'il appuie sur la touche AUG pour augmenter le gain (figure 9). Plus l'indice de confort est grand et le confort d'écoute est médiocre, plus l'action de l'usager sur le gain de haut-parleur est limitée en amplitude et en rapidité lorsque l'usager veut augmenter le gain, puisque cela diminuerait le confort d'écoute.

Inversement, selon les figures 14 et 16, le pas de diminution de gain D1 augmente et la temporisation TEMP2 diminue lorsque l'indice de confort ICONF augmente. Si l'usager souhaite diminuer le gain de haut-parleur GHP en appuyant sur la touche DIM (figure 10), son action est limitée en amplitude et rapidité si le confort est bon. Lorsque le confort diminue, l'action de l'usager a une amplitude et une rapidité plus grande, puisque la diminution du gain de haut-parleur améliore le confort d'écoute.

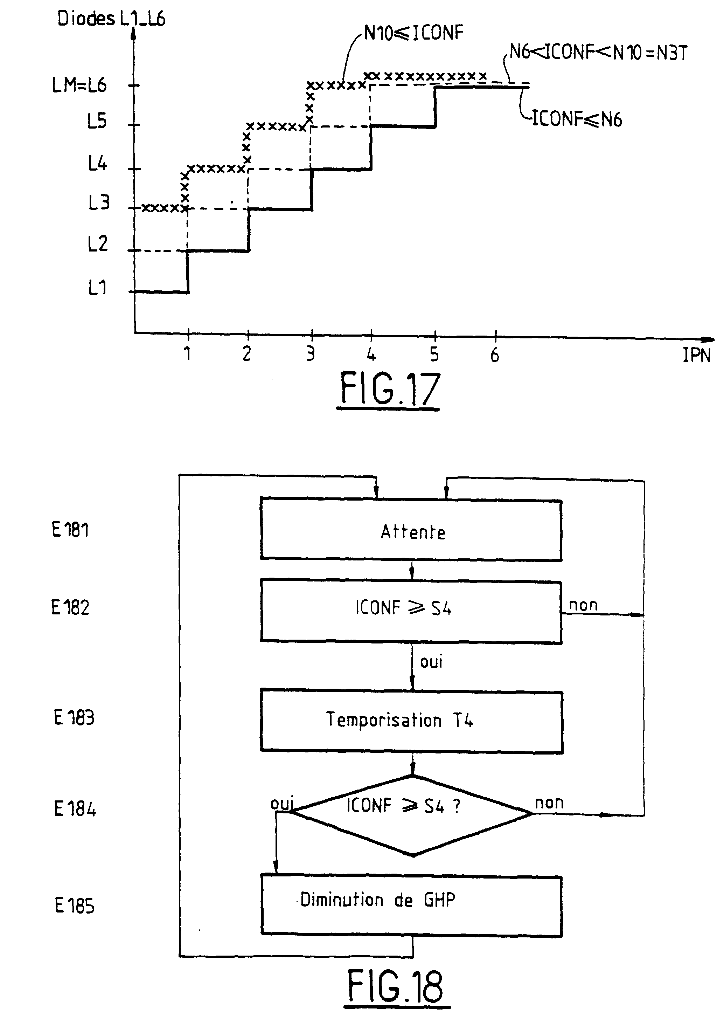

En outre, l'activation des diodes de niveau d'écoute L1 à L6 dépend de l'indice de confort ICONF. Selon la figure 17, l'activation des diodes L1 à LM=L6 en fonction de l'indice de plage de niveau IPN (étapes E81, E82) est représentée pour trois plages de variation de l'indice ICONF. Les trois plages de variation sont définies par des troisièmes seuils N31 à N3T, dits seuils de décalage, par exemple au nombre de deux et égaux à N6 et N3T=N10 respectivement.

Lorsque le confort est bon, c'est-à-dire l'indice ICONF est petit et inférieur au seuil N6, l'activation des diodes L1 à L6 est réalisée comme il a été décrit en référence aux étapes E81 et E82. Lorsque le confort se dégrade, l'indice ICONF augmente et est par exemple compris entre N6 et N10. L'activation des diodes L1 à L6 est modifiée de sorte que soit activée la diode de rang supérieur d'une unité à la diode qui serait activée par les étapes E81 et E82 en correspondance avec le niveau réel défini par l'indice IPN. Si l'indice ICONF est supérieur au seuil N10, le confort est encore plus mauvais et la diode activée est celle de rang supérieur de deux unités à la diode correspondant à l'indice IPN. Comme il apparaît à la figure 17, si la diode activée correspondant à l'indice IPN est la diode L6, l'indice ICONF n'a pas d'influence. Si la diode activée correspondant à l'indice IPN est L5, le "décalage" d'activation de diode n'est que d'une unité au maximum.

Ainsi, plus le confort est mauvais, c'est-à-dire lorsque l'indice ICONF est grand, plus le rang de la diode activée L1 à L6 est "décalé" vers un rang supérieur pour indiquer à l'usager un niveau d'écoute fictif plus grand que le niveau réel défini par l'indice IPN, ce qui incite l'usager à ne pas augmenter, voire à diminuer le gain de haut-parleur, ce qui tend alors à augmenter le confort d'écoute.

Les effets de ICONF sur les paramètres A1, D1, TEMP1 et TEMP2 et sur l'activation/désactivation des diodes de niveaux L1 à L6 sont combinables pour augmenter l'influence de l'indice de confort ICONF sur l'évolution de gain de haut-parleur GHP, ou seulement l'un ou quelques uns des effets sont choisis.

En variante, les pas d'augmentation A2 (étape E94) et de diminution D2 (étape E1O4) sont également déterminés en fonction de l'indice ICONF.

En outre, d'autres effets de l'indice de confort ICONF sur le gain de haut-parleur GHP interviennent sans action de l'usager sur les touches AUG et DIM. Ainsi, en référence à la figure 18, après une étape d'attente E181, lorsque l'indice de confort ICONF est supérieur à un quatrième seuil prédéterminé élevé S4 (étape 182), une temporisation T4 est déclenchée, par exemple égale à 30 s (étape E183). Pendant la temporisation T4 l'indice de confort d'écoute ICONF est comparé au seuil S4 de manière cyclique par exemple à chaque période d'échantillonnage des détecteurs d'enveloppe-crête. Si l'indice ICONF est supérieur au seuil S4 pendant la temporisation T4 (étape E184) alors le gain de haut-parleur GHP est diminué d'une valeur prédéterminée égale à 0,5 dB après la temporisation T4 (étape E185). L'algorithme est ensuite rebouclé sur l'étape d'attente E181. Si pendant la temporisation T4, l'indice de confort ICONF n'est plus supérieur au seuil S4, alors l'algorithme est rebouclé sur l'étape d'attente E181.

## Revendications

1. Procédé de correction de gain de haut-parleur (GHP) dans un terminal téléphonique mains-libres muni d'un haut-parleur (HP) en sortie d'une voie de réception, et d'un microphone (MI) en entrée d'une voie d'émission, et de moyens de commande de gain (AUG, DIM, PP) pour commander des modifications du gain du haut-parleur (GHP), les voies d'émission et de réception étant desservies par une ligne téléphonique (LT), caractérisé en ce qu'il comprend les étapes cycliques de :

   - mesurer (E11) dans la voie d'émission un signal d'émission (SED2) et dans la voie de réception un signal de réception (SED5),
   - déterminer (E14) un gain de compression d'émission (GCOMPE) et un gain de compression de réception (GCOMPR) respectivement pour que le produit (E12) du signal d'émission mesuré (SED2) par le gain de compression d'émission (GCOMPE) soit compris (E13) entre deux seuils prédéterminés (SE1, SE2) et le produit du signal de réception mesuré (SED5) par le gain de compression de réception (GCOMPR) soit compris entre deux autres seuils prédéterminés (SR1, SR2),
   - mesurer dans la voie d'émission un signal de sortie (SED1) du microphone (MI) et dans la voie de réception un signal d'entrée (SED6) du haut-parleur (HP),
   - comparer (E31) le signal de sortie de microphone mesuré (SED1) et le signal d'entrée de haut-parleur mesuré (SED6) pour déterminer (E31) un gain de trajet d'écho acoustique (ITEA) entre le haut-parleur (HP) et le microphone (MI) ,
   - déterminer (E33) un gain de stabilité (GSECU, IGSECU) en fonction des gain de compression d'émission (GCOMPE), gain de compression de réception (GCOMPR), gain de trajet d'écho acoustique (GTEA, ITEA) et gain de haut-parleur (GHP),
   - déterminer (E111) un indice de confort d'écoute (ICONF) en fonction du gain de stabilité (GSECU, IGSECU) et de l'indice de confort d'écoute au cycle précédent,

- comparer (E113) l'indice de confort d'écoute (ICONF) avec des seuils prédéterminés (N21 à N2R),
- sélectionner (E114) deux des seuils prédéterminés (N21 à N2R) encadrant l'indice de confort d'écoute (ICONF) et définissant une plage de variation de l'indice de confort d'écoute (ICONF) à laquelle sont associées des paramètres de modification du gain (A1, TEMP1, D1, TEMP2), et
- modifier (E114) le gain de haut-parleur (GHP) commandé par les moyens de commande de gain en pondérant le gain de haut-parleur par les paramètres de modification.

2. Procédé de correction conforme à la revendication 1, pour lequel le terminal téléphonique comprend un moyen annuleur d'écho acoustique (AEA) traversé par les voies d'émission et de réception, caractérisé en ce qu'il comprend en outre l'étape de :

- mesurer dans la voie d'émission un signal d'entrée (SED1) du moyen annuleur d'écho acoustique (AEA) à comparer avec le signal d'émission mesuré (SED2), ledit signal d'émission mesuré (SED2) étant mesuré en sortie du moyen d'annuleur d'écho acoustique, pour déterminer (E32) un gain d'annuleur d'écho acoustique (GAEA, IAEA) entre les entrée et sortie de la voie d'émission dans le moyen annuleur d'écho acoustique (AEA),

le gain de stabilité (GSECU, IGSECU) étant déterminé également en fonction du gain d'annuleur d'écho acoustique (GAEA, IAEA).

3. Procédé de correction conforme à la revendication 1 ou 2, caractérisé en ce qu'il comprend les étapes de :

- mesurer un signal (SED3) en sortie de la voie d'émission et un signal (SED4) en entrée de la voie de réception, et
- comparer (E31) les signaux mesurés en sortie de voie d'émission et en entrée de voie de réception (SED3, SED4) pour déterminer un gain de trajet d'écho électrique (GTEE, ITEE) entre la sortie de la voie d'émission et l'entrée de la voie de réception,

le gain de stabilité (GSECU, IGSECU) étant déterminé également en fonction du gain de trajet d'écho électrique (GTEE, ITEE).

4. Procédé de correction conforme à la revendication 3, pour lequel le terminal téléphonique comprend un moyen annuleur d'écho électrique (AEE) en sortie de la voie d'émission et en entrée de la voie de réception, caractérisé en ce qu'il comprend en outre l'étape de :

- mesurer dans la voie de réception un signal de sortie (SED5) du moyen annuleur d'écho électrique (AEE) à comparer avec le signal (SED4) mesuré en entrée de la voie de réception, ladite entrée de voie de réception correspondant à l'entrée du moyen annuleur d'écho électrique, pour déterminer (E32) un gain d'annuleur d'écho électrique (GAEE, IAEE) entre les entrée et sortie de la voie de réception dans le moyen annuleur d'écho électrique (AEE),

le gain de stabilité (GSECU, IGSECU) étant déterminé également en fonction du gain d'annuleur d'écho électrique (GAEE, IAEE).

5. Procédé de correction conforme à l'une quelconque des revendications 1 à 4, caractérisé en ce que les paramètres de modification de gain sont constants dans une plage de variation quelconque de l'indice de confort d'écoute (ICONF) définie par deux des seuils prédéterminés (N21 à N2R).

6. Procédé de correction conforme à l'une quelconque des revendications 1 à 5, caractérisé en ce que les paramètres de modification de gain comprennent un pas d'augmentation (A1), respectivement de diminution (D1), de gain de haut-parleur (GHP) qui varie inversement proportionnellement, respectivement proportionnellement à l'indice de confort d'écoute (ICONF).

7. Procédé de correction conforme à l'une quelconque des revendications 1 à 6, caractérisé en ce que les paramètres de modification du gain comprennent une durée (TEMP1, TEMP2) entre deux augmentations, respectivement diminutions, successives de gain de haut-parleur (GHP) correspondant à deux commandes successives (E91, E92 ; E101, E102) d'augmentation (AUG), respectivement de diminution (DIM), de gain de haut-parleur, la durée entre deux augmentations, respectivement diminutions, variant proportionnellement, respectivement inversement proportionnellement à l'indice de confort d'écoute (ICONF).

8. Procédé de correction conforme aux revendications 6 et 7, caractérisé en ce qu'il comprend consécutivement à une commande d'augmentation (E91), respectivement de diminution (E101), du gain du haut-parleur (GHP) les étapes de :

- vérifier (E92, E102) si la commande d'augmentation, respectivement de diminution, est séparée de moins d'une durée de séparation prédéterminée d'une commande d'augmentation, respectivement de diminution, précédente, et
- dans l'affirmative, n'augmenter avec un pas d'augmentation prédéterminé (A2) , respectivement ne diminuer avec un pas de diminution déterminé (D2), le gain de haut-parleur qu'après la durée d'augmentation (TEMP1), respectivement de diminution (TEMP2).

9. Procédé de correction conforme à l'une quelconque des revendications 1 à 8, caractérisé en ce qu'il comprend l'étape d'afficher (E112) la valeur de l'indice de confort d'écoute (ICONF) en activant l'un de plusieurs premiers moyens d'affichage (L7 à L12).

10. Procédé de correction conforme à la revendication 9, caractérisé en ce que l'étape d'afficher (E112) la valeur de l'indice de confort d'écoute (ICONF) comprend :

- comparer l'indice de confort d'écoute à des seuils d'affichage inférieurs et supérieurs prédéterminés (N1 à NQ), lesdits seuils d'affichage inférieurs étant couplés respectivement aux seuils supérieurs pour définir des plages (P1 à P6) de variation de l'indice de confort d'écoute (ICONF) qui se chevauchent partiellement deux à deux, chaque plage de variation de l'indice de confort d'écoute étant associée à l'un des premiers moyens d'affichage (L7 à L12),
- activer le premier moyen d'affichage (L(M+m)) associé à la plage de variation (P(m)) dans laquelle se trouve l'indice de confort (ICONF) tant que l'indice de confort est compris entre les seuils d'affichage inférieur et supérieur (N(2m-3)) et (N(2m)) définissant la plage de variation, et
- activer le premier moyen d'affichage de rang inférieur (L(M+m-1)), respectivement supérieur (L(M+m+1)), lorsque l'indice de confort (ICONF) sort de la plage de variation (P(m)) associée au moyen d'affichage activé par le seuil inférieur, respectivement supérieur définissant la plage de variation.

11. Procédé de correction conforme à la revendication 10, caractérisé en que lesdits plusieurs premiers moyens d'affichage sont de plusieurs couleurs, les longueurs d'onde desdites plusieurs couleurs étant croissantes avec l'indice de confort.

12. Procédé de correction conforme à l'une quelconque des revendications 1 à 11, caractérisé en ce qu'il comprend l'étape d'afficher (E82, E97, E107) la valeur du gain de haut-parleur (GHP) par plusieurs seconds moyens d'affichage (L1 à L6).

13. Procédé de correction conforme à la revendication 12, caractérisé en ce qu'à l'étape d'afficher (E82) la valeur du gain de haut-parleur (GHP), les seconds moyens d'affichage affichent une valeur de gain supérieure à la valeur réelle du gain de haut-parleur lorsque l'indice de confort (ICONF) est supérieur à un seuil prédéterminé de décalage (N31 à N3T).

14. Procédé de correction conforme à l'une quelconque des revendications 1 à 13, comprenant les étapes de :

- comparer (E182) l'indice de confort d'écoute (ICONF) à un quatrième seuil prédéterminé élevé (S4), et
- diminuer (E185) le gain de haut-parleur (GHP) d'une valeur prédéterminée lorsque l'indice de confort d'écoute (ICONF) est supérieur au quatrième seuil (S4) pendant une durée prédéterminée (T4).

**Patentansprüche**

1. Verfahren zur Korrektur der Lautsprecherverstärkung (GHP) in einem Freisprechtelephonendgerät, das mit einem Lautsprecher (HP) am Ende eines Empfangskanals und mit einem Mikrophon (MI) am Eingang eines Sendekanals versehen ist, und mit Mitteln zur Einstellung der Verstärkung (AUG, DIM, PP), um Änderungen der Lautsprecherverstärkung (GHP) auszuführen, wobei die Sende- und Empfangskanäle mit einer Telephonleitung (LT) verbunden sind, dadurch gekennzeichnet, dass es zyklisch die Schritte umfasst:

- Messung (E11) eines Sendesignals (SED2) im Sendekanal und eines Empfangssignals (SED5) im Empfangskanal,
- Bestimmung (E14) eines Sendedämpfungsfaktors (GCOMPE) und eines Empfangsdämpfungsfaktors (GCOMPR), derart, dass das Produkt (E12) aus dem gemessenen Sendesignal (SED2) und dem Sendedämpfungsfaktor (GCOMPE) zwischen zwei vorher festgelegten Schwellenwerten (SE1, SE2) liegt bzw. das Produkt aus dem gemessenen Empfangssignal (SED5) und dem Empfangsdämpfungsfaktor (GCOMPR) zwischen zwei anderen vorher festgelegten Schwellenwerten (SR1, SR2),
- Messung eines Ausgangssignals (SED1) des Mikrophons (MI) im Sendekanal und eines Eingangssignals (SED6) des Lautsprechers (HP) im Empfangskanal,
- Vergleich (E31) des gemessenen Mikrophonausgangssignals (SED1) mit dem gemessenen Lautsprechereingangssignal (SED6) zur Bestimmung (E31) eines Wegverstärkungsfaktors des akustischen Echos (ITEA) zwischen dem Lautsprecher (HP) und dem Mikrophon (MI),
- Bestimmung (E33) eines Stabilitätsverstärkungsfaktors (GSECU, IGSECU) in Abhängigkeit vom Sendedämpfungsfaktor (GCOMPE), Empfangsdämpfungsfaktor (GCOMPR), Wegverstärkungsfaktor des akustischen Echos (GTEA, ITEA) und des Lautsprecherverstärkungsfaktors (GHP),
- Bestimmung (E111) eines Hörkomfortindex (ICONF) in Abhängigkeit vom Stabilitätsverstärkungsfaktor (GSECU, IGSECU) und vom Hörkomfortindex des vorangehenden Zyklus,
- Vergleich (E113) des Hörkomfortindex (ICONF) mit vorher festgelegten Schwellenwerten (N21 bis N2R),
- Auswahl (E114) von zwei der vorher festgelegten Schwellenwerte (N21 bis N2R), zwischen denen der Hörkomfortindex (ICONF) liegt und die einen Schwankungsbereich des Hörkomfortindex (ICONF) definieren, dem Parameter der Verstärkungsänderung zugeordnet sind (A1, TEMP1, D1, TEMP2), und
- Änderung (E114) der Lautsprecherverstärkung (GHP), gesteuert durch die Mittel zur Regelung der Verstärkung, wobei die Lautsprecherverstärkung mit den Änderungsparametern gewichtet wird.

2. Korrekturverfahren nach Patentanspruch 1, für das das Telephonendgerät ein Mittel zur Unterdrückung des akustischen Echos (AEA) umfasst, das die Sende- und Empfangskanäle durchqueren, dadurch gekennzeichnet, dass es außerdem den Schritt

- Messung eines Eingangssignals (SED1) des Mittels zur Unterdrückung des akustischen Echos (AEA) im Sendekanal zum Vergleich mit dem gemessenen Sendesignal (SED2), wobei dieses gemessene Sedesignal (SED2) am Ausgang des Mittels zur Unterdrückung des akustischen Echos (AEA) gemessen wird, um einen Verstärkungsfaktor des akustischen Echos (GAEA, IAEA) zwischen Eingang und Ausgang des Sendekanals im Mittel zur Unterdrückung des akustischen Echos (AEA) zu bestimmen (E32),

umfasst, wobei der Stabilitätsverstärkungsfaktor (GSECU, IGSECU) ebenfalls in Abhängigkeit vom Verstärkungsfaktor des Unterdrückers des akustischen Echos (GAEA, IAEA) bestimmt wird.

3. Korrekturverfahren nach Patentanspruch 1 oder 2, dadurch gekennzeichnet, dass es die folgenden Schritte umfasst:

- Messung eines Signals (SED3) am Ausgang des Sendekanals und eines Signals (SED4) am Eingang des Empfangssignals, und
- Vergleich (E31) der am Ausgang des Sendekanals und am Eingang des Empfangskanals gemessenen Signale (SED3, SED4) zur Bestimmung eines Wegverstärkungsfaktors des elektrischen Echos (GTEE, ITEE) zwischen dem Ausgang des Sendekanals und dem Eingang des Empfangskanals,
- wobei der Stabilitätsverstärkungsfaktor (GSECU, IGSECU) ebenfalls in Abhängigkeit vom Wegverstärkungsfaktor des elektrischen Echos (GTEE, ITEE) bestimmt wird.

4. Korrekturverfahren nach Patentanspruch 3, für das das Telephonendgerät ein Mittel zur Unterdrückung des elektrischen Echos (AEE) am Ausgang des Sendekanals und am Eingang des Empfangskanals umfasst, dadurch gekennzeichnet, dass es außerdem den Schritt

- Messung eines Ausgangssignals (SED5) des Mittels zur Unterdrückung des elektrischen Echos (AEE) im Empfangskanal zum Vergleich mit dem am Eingang des Empfangskanals gemessenen Signal (SED4), wobei dieser Eingang des Empfangskanals dem Eingang des Mittels zur Unterdrückung des elektrischen Echos entspricht, um einen Verstärkungsfaktor des elektrischen Echos (GAEE, IAEE) zwischen Eingang und Ausgang des Empfangskanals im Mittel zur Unterdrückung des elektrischen Echos (AEE) zu bestimmen (E32),

umfasst, wobei der Stabilitätsverstärkungsfaktor (GSECU, IGSECU) ebenfalls in Abhängigkeit vom Verstärkungsfaktor des Unterdrückers des elektrischen Echos (GAEE, IAEE) bestimmt wird.

5. Korrekturverfahren nach irgendeinem der Patentansprüche 1 bis 4, dadurch gekennzeichnet, dass die Parameter der Verstärkungsänderung in einem beliebigen Schwankungsbereich des Hörkomfortindex (ICONF) konstant sind, der durch zwei der vorher festgelegten Schwellenwerte (N21 bis N2R) definiert wird.

6. Korrekturverfahren nach irgendeinem der Patentansprüche 1 bis 5, dadurch gekennzeichnet, dass die Parameter der Verstärkungsänderung einen Erhöhungs- (A1) bzw. Verringerungsschritt (D1) der Lautsprecherverstärkung (GHP) umfassen, die sich umgekehrt proportional bzw. proportional zum Hörkomfortindex (ICONF) ändern.

7. Korrekturverfahren nach irgendeinem der Patentansprüche 1 bis 6, dadurch gekennzeichnet, dass die Parameter der Verstärkungsänderung einen Zeitraum (TEMP1, TEMP2) zwischen zwei aufeinanderfolgenden Erhöhungen bzw. Verringerungen der Lautsprecherverstärkung (GHP) umfassen, die zwei aufeinanderfolgenden Einstellungen (E91, E92; E101, E102) zur Erhöhung (AUG) oder Verringerung (DIM) der Lautsprecherverstärkung entsprechen, wobei der Zeitraum zwischen zwei Erhöhungen bzw. Verringerungen sich proportional bzw. umgekehrt proportional zum Hörkomfortindex (ICONF) ändern.

8. Korrekturverfahren nach den Patentansprüchen 6 und 7, dadurch gekennzeichnet, dass es anschließend an eine Erhöhungs- (E91) bzw. Verringerungseinstellung (E101) der Lautsprecherverstärkung (GHP) die folgenden Schritte umfasst:

   - Prüfung (E92, E102), ob die Erhöhungs- bzw. Verringerungseinstellung um weniger, als einen vorher festgelegten Trennungszeitraum von einer vorangehenden Erhöhungs- bzw. Verringerungseinstellung getrennt ist, und
   - in diesem Fall Erhöhung um einen vorher festgelegten Erhöhungsschritt (A2) bzw. Verringerung um einen vorher festgelegten Verringerungsschritt (D2) der Lautsprecherverstärkung erst nach dem Erhöhungs- (TEMP1) bzw. Verringerungszeitraum (TEMP2).

9. Korrekturverfahren nach irgendeinem der Patentansprüche 1 bis 8, dadurch gekennzeichnet, dass es den Schritt der Anzeige (E112) des Wertes des Hörkomfortindex (ICONF) durch Einschalten eines von mehreren ersten Anzeigemitteln (L7 bis L12) umfasst.

10. Korrekturverfahren nach Patentanspruch 9, dadurch gekennzeichnet, dass der Schritt der Anzeige (E112) des Wertes des Hörkomfortindex (ICONF) umfasst:

   - Vergleich des Hörkomfortindex mit vorher festgelegten unteren und oberen Anzeigeschwellenwerten (N1 bis NQ), wobei diese unteren Anzeigeschwellenwerte jeweils den oberen Schwellenwerten zugeordnet sind, um Schwankungsbereiche (P1 bis P6) des Hörkomfortindex (ICONF) zu definieren, die sich paarweise teilweise überlappen, wobei jeder Schwankungsbereich des Hörkomfortindex einem der ersten Anzeigemittel (L7 bis L12) zugeordnet ist,
   - Einschalten des ersten Anzeigemittels (L(M+m)), das dem Anzeigebereich (P(m)) zugeordnet ist, in dem sich der Hörkomfortindex (ICONF) befindet, wenn sich der Hörkomfort zwischen dem unteren und dem oberen Anzeigeschwellenwert (N(2m-3)) und (N(2m)) befindet, die den Schwankungsbereich definieren, und
   - Einschalten des ersten Anzeigemittels der vorangehenden ((L(M+m-1)) bzw. folgenden Nummer (L(M+m+1)), wenn der Komfortindex (ICONF) den Schwankungsbereich (P(m)) verlässt, der dem Anzeigemittel zugeordnet ist, das durch den unteren bzw. oberen Schwellenwert eingeschaltet wird, die den Schwankungsbereich definieren.

11. Korrekturverfahren nach Patentanspruch 10, dadurch gekennzeichnet, dass die genannten mehreren ersten Anzeigemittel mehrere Farben haben, wobei die Wellenlängen der genannten mehreren Farben mit dem Komfortindex wachsen.

12. Korrekturverfahren nach irgendeinem der Patentansprüche 1 bis 11, dadurch gekennzeichnet, dass es den Schritt der Anzeige (E82, E97, E107) des Betrages der Lautsprecherverstärkung (GHP) durch mehrere zweite Anzeigemittel (L1 bis L6) umfasst.

**13.** Korrekturverfahren nach Patentanspruch 12, dadurch gekennzeichnet, dass die zweiten Anzeigemittel im Schritt der Anzeige (E82) des Betrages der Lautsprecherverstärkung (GHP) einen höheren Verstärkungsbetrag anzeigen, als den tatsächlichen Betrag der Lautsprecherverstärkung, wenn der Komfortindex (ICONF) größer ist, als ein vorher festgelegter Verschiebungsschwellenwert (N31 bis N3T).

**14.** Korrekturverfahren nach irgendeinem der Patentansprüche 1 bis 13, das die folgenden Schritte umfasst:

- Vergleich (E182) des Hörkomfortindex (ICONF) mit einem hohen vierten vorher festgelegten Schwellenwert (S4) und
- Verringerung (E185) der Lautsprecherverstärkung (GHP) um einen vorher festgelegten Betrag, wenn der Hörkomfortindex (ICONF) für eine vorher festgelegte Zeit (T4) größer ist, als der vierte Schwellenwert (S4).

## Claims

**1.** Method of loudspeaker gain (GHP) correction in a hands-free telephone terminal having a loudspeaker (HP) at the output of a receive channel and a microphone (MI) at the input of a transmit channel, and gain control means (AUG, DIM, PP) for controlling modifications of the loudspeaker gain (GHP), the transmit and receive channels being served by a telephone line (LT), characterized in that it comprises the cyclic steps of:

- measuring (E11) a transmit signal (SED2) on the transmit channel and a receive signal (SED5) on the receive channel,
- determining (E14) a transmit compression gain (GCOMPE) and a receive compression gain (GCOMPR) respectively so that the product (E12) of the measured transmit signal (SED2) by the transmit compression gain (GCOMPE) lies between (E13) two predetermined thresholds (SE1, SE2) and the product of the measured receive signal (SED5) by the receive compression gain (GCOMPR) lies between two other predetermined thresholds (SR1, SR2),
- measuring an output signal (SED1) of the microphone (MI) on the transmit channel and an input signal (SED6) of the loudspeaker (HP) on the receive channel,
- comparing (E31) the measured microphone output signal (SED1) and the measured loudspeaker input signal (SED6) to determine (E31) an acoustic echo path gain (ITEA) between the loudspeaker (HP) and the microphone (MI),
- determining (E33) a stability gain (GSECU, IGSECU) as a function of the transmit compression gain (GCOMPE), receive compression gain (GCOMPR), acoustic echo path gain (GTEA, ITEA) and loudspeaker gain (GHP),
- determining (E111) a listening comfort index (ICONF) as a function of the stability gain (GSECU, IGSECU) and the listening comfort index of the preceding cycle,
- comparing (E113) the listening comfort index (ICONF) with predetermined thresholds (N21 through N2R),
- selecting (E114) two of the predetermined thresholds (N21 through N2R) bracketing the listening comfort index (ICONF) and defining a range of variation of the listening comfort index (ICONF) with which gain modification parameters (A1, TEMP1, D1, TEMP2) are associated, and
- modifying (E114) the loudspeaker gain (GHP) controlled by the gain control means by weighting the loudspeaker gain by the modification parameters.

**2.** Correction method according to claim 1, for which the telephone terminal comprises acoustic echo canceller means (AEA) through which the transmit and receive channels pass, characterized in that it further comprises the step of:

- measuring an input signal (SED1) of the acoustic echo canceller means (AEA) on the transmit channel for comparison with the measured transmit signal (SED2), said measured transmit signal (SED2) being measured at the output of the acoustic echo canceller means, thereby determining (E32) an acoustic echo canceller gain (GAEA, IAEA) between the input and output of the transmit channel in the acoustic echo canceller means (AEA),

the stability gain (GSECU, IGSECU) being determined also according to the acoustic echo canceller gain (GAEA, IAEA).

**3.** Correction method according to claim 1 or claim 2, characterized in that it comprises the steps of :

- measuring a signal (SED3) at the output of the transmit channel and a signal (SED4) at the input of the receive channel, and
- comparing (E31) the signals (SED3, SED4) measured at the output of the transmit channel and at the input of the receive channel to determine an electric echo path gain (GTEE, ITEE) between the output of the transmit channel and the input of the receive channel,

  the stability gain (GSECU, IGSECU) being determined also according to the electric echo path gain (GTEE, ITEE).

4. Correction method according to claim 3, for which the telephone terminal comprises electric echo canceller means (AEE) at the output of the transmit channel and at the input of the receive channel, characterized in that it further comprises the step of:

- measuring an output signal (SED5) of the electric echo cancelling means (AEE) on the receive channel for comparison with the signal (SED4) measured at the input of the receive channel, said receive channel input corresponding to the input of the electric echo canceller means, thereby determining (E32) an electric echo canceller gain (GAEE, IAEE) between the input and output of the receive channel in the electric echo canceller means (AEE),

  the stability gain (GSECU, IGSECU) being determined also in accordance with the electric echo canceller gain (GAEE, IAEE).

5. Correction method according to any one of claims 1 through 4, characterized in that the gain modification parameters are constant within any range of variation of the listening comfort index (ICONF) defined by two of the predetermined thresholds (N21 through N2R).

6. Correction method according to any one of claims 1 through 5, characterized in that the gain modification parameters comprise a loudspeaker gain (GHP) increase increment (AI), respectively decrease decrement (D1), which varies in inverse proportion, respectively in direct proportion, to the listening comfort index (ICONF).

7. Correction method according to any one of claims 1 through 6, characterized in that the gain modification parameters comprise a time-delay (TEMP1, TEMP2) between two successive loudspeaker gain (GHP) increases, respectively decreases, corresponding to two successive controls (E91, E92; E101, E102) to increase (AUG), respectively to decrease (DIM), the loudspeaker gain, the time-delay between two increases, respectively decreases, varying in direct proportion, respectively in inverse proportion, to the listening comfort index (ICONF).

8. Correction method according to claims 6 and 7, characterized in that it comprises consecutively upon a control to increase (E91), respectively to decrease (E101), the loudspeaker gain (GHP), the steps of:

- verifying (E92, E102) if the increase, respectively decrease, control is separated by less than a predetermined separation time from a preceding increase, respectively decrease, control, and
- in the affirmative, to increase with a predetermined increase increment (A2), respectively to decrease with a determined decrease decrement (D2), the loudspeaker gain only after the increase time-delay (TEMP1), respectively the decrease time-delay (TEMP2).

9. Correction method according to any one of claims 1 through 8, characterized in that it comprises the step of displaying (E112) the value of the listening comfort index (ICONF) by activating one of plural first display means (L7 through L12).

10. Correction method according to claim 9, characterized in that the step (E112) of displaying the value of the listening comfort index (ICONF) comprises :

- comparing the listening comfort index to predetermined lower and upper display thresholds (N1 through NQ), said lower display thresholds being respectively coupled to the upper display thresholds to define ranges (P1 through P6) of variation of the listening comfort index (ICONF) which overlap partially in pairs, each range of variation of the listening comfort index being associated with one of the first display means (L7 through L12),
- activating the first display means (L(M+m)) associated with the range of variation (P(m)) in which the comfort index (ICONF) is located if the comfort index lies between the lower and upper display thresholds (N(2m-3)) and (N(2m)) defining the range of variation, and

- activating the first display means of lower rank (L(M+m-1)), respectively higher rank (L(M+m+1)), if the comfort index (ICONF) leaves the range of variation (P(m)) associated with the display means activated by the lower threshold, respectively upper threshold, defining the range of variation.

11. Correction method according to claim 10, characterized in that said plural first display means are of plural colours, the wavelengths of said plural colours increasing with the comfort index.

12. Correction method according to any one of claims 1 through 11, characterized in that it comprises the step (E82, E97, E107) of displaying the value of the loudspeaker gain (GHP) on plural second display means (L1 through L6).

13. Correction method according to claim 12, characterized in that in the step (E82) of displaying the value of the loudspeaker gain (GHP), the second display means display a gain value more than the actual value of the loudspeaker gain if the comfort index (ICONF) is more than a predetermined offset threshold (N31 through N3T).

14. Correction method according to any one claims 1 through 13, comprising the steps of:

- comparing (E182) the listening comfort index (ICONF) with a high predetermined fourth threshold (S4), and
- reducing (E185) the loudspeaker gain (GHP) by a predetermined value if the listening comfort index (ICONF) is more than the fourth threshold (S4) during a predetermined time-delay (T4).

FIG.1

AEA

SM

AS — e(n)

ECE/Y(n)

DEC1 — SED1 — SED6 — DEC6

FILTRE — FI

X(n)

DEC 2 — SED2

SD

# FIG.2

| E1 (FIG.4) | Compression des niveaux émission et réception<br><br>ICOMPE　　　　ICOMPR |
| E2 (FIG.5) | Sélection de signal dominant<br><br>IGEXP |
| E3 (FIG.6) | Affaiblissement de sécurité<br><br>IGSECU |
| E4 | Affaiblissement écho résiduel<br><br>à l'émission : IAER |
| E5 | Variation de gain<br><br>IGE　　　　IGR |

FIG.3

E1

| E11 | LECTURE SED2 |
|---|---|

| E12 | SED2 × GCOMPE |
|---|---|

E13

Comparaison

| ? < SE1 | SE1 < ? < SE2 | ? > SE2 |
|---|---|---|

E14

| ICOMPE est diminué | ICOMPE est inchangé | ICOMPE est augmenté |
|---|---|---|

## FIG.4

E2

E1

E21

Expansion fictive

$SR1 < SED5 \times GCOMPR \times GEXP < SR2$

E22

Correction

$SCE = SED2 \times GCOMPE - SBE$

$SCR = SED5 \times GCOMPR \times GEXP - SBR$

E23

Comparaison

? $SCE < > SCR$

E3

FIG.5

FIG.6

IPN(IHP)
NIVEAU D'ECOUTE

ICONF
CONFORT D'ECOUTE

| | | | | | | vert | vert | vert | jaune | jaune | rouge |
|---|---|---|---|---|---|---|---|---|---|---|---|

L1  LM=L6  L7  L2M=L12

## FIG.7

E81

Niveau d'écoute   IPN

IHP = IGHP + ( P - IGEXP )

E82

diodes L1 à L6

## FIG.8

FIG.9

E 101 — Appui sur DIM

E 102 — 2 appuis sur DIM consécutifs ?
oui / non

E 103 — Temporisation TEMP2

E 104 — Diminution de GHP

de D2 = 0,5 dB
IGHP = IGHP + 1

de D1 = 2 dB
IGHP = IGHP + 4

E 105 — IGHP < IGHPMAX ?
non
oui

IGHP = IGHPMAX

E 106 — Niveau d'écoute IPN

E 107 — diodes L1 à L6

FIG.10

E111 | ICONF (n) = α . IGSECU(n) + (1-α) . ICONF (n-1)

E112

diode L (M+m) activée

N(2m-3) ≥ ICONF   non

oui

ICONF ≥ N(2m)   non

oui

diode L(M+m-1)activée

diode L(M+m+1)activée

diode L(M+m)
désactivée

E113

Comparaison

ICONF < > N21 à N2R

E114

Détermination

TEMP1 ( étape E93 ) ; A1 ( étape E94 )

ou TEMP2 ( étape 103 ) ; D1 ( étape E104 )

## FIG.11

FIG.12

FIG.13

FIG.14

FIG.15

FIG.16

Diodes L1_L6

N10 ≤ ICONF

N6 < ICONF < N10 = N3T

LM=L6

L5

L4

L3

L2

L1

ICONF ≤ N6

1    2    3    4    5    6         IPN

## FIG.17

E181    Attente

E182    ICONF ≥ S4         non

oui

E183    Temporisation T4

E184    ICONF ≥ S4 ?    non

oui

E185    Diminution de GHP

## FIG.18